# EUROPEAN PATENT SPECIFICATION

(11) **EP 3 920 357 B1**
(45) Date of publication and mention of the grant of the patent: **24.07.2024**
(21) Application number: 20178428.7
(22) Date of filing: 05.06.2020
(51) Int. Cl.: H02J 3/00, H02J 3/38, H02J 3/40

(54) **SYSTEM FOR MANAGING POWER FLOW OR ENERGY IN A NANO- OR MICROGRID**
SYSTEM ZUR LEISTUNGSFLUSS- ODER ENERGIEFLUSSVERWALTUNG IN EINEM NANO- ODER MIKRONETZ
SYSTÈME DE GESTION DE FLUX DE PUISSANCE OU D'ÉNERGIE DANS UN NANORÉSEAU OU UN MINIRÉSEAU

(43) Date of publication of application: 08.12.2021
(73) Proprietor: VITO NV, 2400 Mol (BE)
(72) Inventor: ALAM, Mohammad Meraj, 2400 Mol (BE); RAUF, Abdul-Mannan, 3500 Hasselt (BE)
(74) Representative: Nederlandsch Octrooibureau

(56) References cited:
- CN-A- 106 253 344
- US-A1- 2013 027 997
- US-A1- 2014 098 449
- US-A1- 2020 005 201

## Description

### Field of the disclosure

The present disclosure relates to a system for managing power flow or energy in a nano- or microgrid. The present disclosure further relates to a method for operating a system for managing power flow or energy in a nano- or microgrid.

### Background art

Nano- or microgrids typically comprise a renewable energy source, and normally operate connected to and synchronous with a wide area synchronous grid (also called macrogrid or electrical grid). Typical types of renewable energy sources are single/multiple-phase small/medium photovoltaic (PV) systems and small/medium wind turbines (up to approx. 300 kW) in a low voltage electrical grid (nominal voltage up to 1kV), large PV systems and wind turbines and small/medium wind/solar power plants or farms (up to approx. 1-5 MW) in a medium voltage electrical grid (nominal voltage above 1kV up to 30kV), large solar farms and large onshore windfarms (up to approx. 100 MW) in a high voltage electrical grid (nominal voltage above 30kV up to 380kV), and large offshore wind farms and very large solar farms (up to approx. 1.5 GW) or extra-large wind/solar farms (greater that 1.5 GW) in an extra high voltage electrical grid (nominal voltage above 380kV).

The renewable energy sources must be capable of operating continuously within a voltage and frequency variation limits encountered in normal operation. Tolerance to voltage and frequency variations in power systems depends on the level at the point of common coupling (PCC) of the renewable energy sources connected to the electrical grid. Renewable energy sources are required to operate within a range around the rated voltage and frequency at PCC to avoid disconnection. Thus, distribution system operators (DSO) like to maintain the operating voltages or frequencies typically between the variation limits. The operating voltages or frequencies at each voltage limit or frequency limit are highly dependent on the local conditions and can be different in various countries. For instance, in most European countries, voltage variation range between 0.90 per unit (207 V rms or 10% below the nominal value 230 V) to 1.10 per unit (253 V rms or 10% above the nominal value 230 V) for safe and stable operation. Furthermore, in some European countries, frequency variation limits range between 49.5 and 50.5 Hz (i.e., 10% below and above the nominal value 50 Hz).

To keep the operating voltages or frequencies within said limits, the renewable energy sources are disconnected and their energy or power flow into the electrical grid is curtailed. This problem is known as active power curtailment (APC). APC is most prominent in electrical grids, where local active power and phase voltages are directly related to each other in such a way that the phase voltages increase (overvoltage condition) with the increase in active power injection and decrease (under voltage condition) with the increase in active power drawn. In cases where a local converter is used, the sensitivity of operating voltages at the point of interconnection (POI) of the local converter plays an important role, which increases with the increase in the distance from a substation transformer. This means that the operating voltages near the end of the electrical grid are far more sensitive and susceptible to changes with the active power injected or drawn as compared to near the substation transformer.

Electrical grid phase voltage balancing systems for maintaining a balanced load condition in response to variations in the load applied to one or more phases of a multi-phase system are for example known from US2652529, DE102009060364, CN104333035, WO2012175332 or S. Weckx and J. Driesen, "Load Balancing With EV Chargers and PV Inverters in Unbalanced Distribution Grids," in IEEE Transactions on Sustainable Energy, vol. 6, no. 2, pp. 635-643, April 2015, doi: 10.1109/TSTE.2015.2402834. CN104333035 provides a system capable of restraining electrical grid voltage imbalance by automatically output compensating current. Weckx and Driesen. proposes three-phase balancing inverters and offboard three phase Electric Vehicle (EV) chargers in an electrical grid to improve electrical grid voltage conditions by absorbing power from a phase with a lower loading and injecting into the phase with the highest loading. These balancing inverters and offboard EV chargers are additional components compared to the single-phase PV inverters and chargers typically found in homes which distribute the current among three phases. The objective of Weckx and Driesen is to balance the electrical grid voltage and not to eliminate or reduce APC. US 2652529 patent deals with phase balancing system by energizing a capacitive reactance, an inductive reactance and a variable single-phase load from different phase conductors of three-phase system. The patent DE102009060364 links the phase unbalance to charging of EVs, but is equally silent on active power curtailment management. The same holds true for WO2012175332 which is controlling the load of the phases of a three-phase system by means of a controllable switch element.

US 2013/027997 A1 discloses a power conversion system comprising an MPPT unit, a DC bus, a power converter, and a converter controller. The MPPT unit receives a feedback current signal and a feedback voltage signal from a power source and generates an MPPT reference signal based at least in part on the feedback current and voltage signals. The DC bus receives DC power from the power source. The power converter converts the DC power on the DC bus to AC power. The converter controller receives the MPPT reference signal from the MPPT unit and an output power feedback signal measured at an output of the power converter; generates control signals for AC power regulation and maximum power extraction based at least in part on the MPPT reference signal and the output power feedback signal; and sends the control signals to the power converter.

CN 106 253 344 A discloses a power network, a control system thereof, a control method and a network dispatching device in the power field. The objective is to resolve a low utilization ratio of energy generation devices caused by the satisfaction of the balance of supply and demand of grid-connected microgrids or the large demand of the grid-connected microgrids for a power grid. The control method includes the following steps: N microgrids are provided, wherein N is equal and larger than 2, and each microgrid comprises a voltage transformation device, a first busbar, a second busbar, an energy generation device, a load and a connection line, wherein the connection line is provided with a connection line switch, wherein the connection line switch is used for controlling the connection or disconnection of connected microgrids; and the N microgrids are divided into M microgrid groups, the microgrids in each group are communicated with one another through the connection lines, at least one microgrid in each microgrid group is connected with a power grid power supply line through an access switch at a point of common coupling (PCC), and only one access switch in each group is communicated with the power grid power supply line, wherein M and N satisfy the relational expression that 1<=M<=N.

### Summary of the disclosure

It has been found that despite efforts to provide a balanced electrical grid voltage, there is still a need to improve the management of the power flow or energy in a nano- or microgrid.

One of the objectives of the present disclosure is to provide a robust system, which can more effectively manage power flow or energy in a nano- or microgrid, for example to prevent loss of renewable energy when APC occurs.

Another objective of the present disclosure is to provide seamless transition between on-grid and off-grid modes of the nano- or microgrid.

Yet another objective of the present disclosure is to provide effective prediction of possible loss of power or APC of renewable energy sources in advance, and adapt accordingly by pre-emptively managing power flow or energy in a nano- or microgrid.

Additional and alternative objects of the disclosure may be understood from the following:

Accordingly in an aspect of the present disclosure, there is provided a system for managing power flow or energy in a nano- or microgrid, comprising at least one renewable energy source and at least one local load, and between the nano- or microgrid and a wide area synchronous grid comprising at least one phase, the system comprising an input module connectable to said at least one phase and configured to measure at least one electrical input parameter of the at least one phase and to provide electrical input parameter data; at least one primary switching means, configured to connect or disconnect the nano- or microgrid to or from one or more of said at least one phase, resulting in an off-grid or on-grid mode of operation of the nano- or microgrid; and at least one secondary switching means configured to connect or disconnect one or more of the at least one renewable energy source to or from one or more of said at least one local load.

The system further comprises a control unit having inputs for receiving the electrical input parameter data from the input module; receiving local power generation data from a unit within the nano- or microgrid which measures the power actually generated by means of said at least one renewable energy source; and receiving external power generation data from an external provider, said external power generation data being representative of the power that theoretically should be generated by means of said at least one renewable energy source based on external factors, and wherein the control unit is provided for calculating a power difference value based on the local power generation data and the external power generation data; determining a rate of change of the power difference value; operating a decision making process based on the determined rate of change of the power difference value and on the measured at least one electrical input parameter; and operating one or more of the at least one primary switching means and the at least one secondary switching means based on a result of the decision making process.

As a result of the above control unit, by calculating the power difference value and the rate of change thereof, an improved decision making process is provided. It has been found that when a decision is based on phase voltage data only, a power converter (e.g. local converter) can be shut down and its power is curtailed unnecessarily due to, for e.g., temporary factors (temporary overvoltage, short-circuit, temporary unbalanced loading, sudden connection/disconnection of loads etc.) or unfortunate location of the renewable energy source on the feeder which will be explained later in detail with reference to Table 2 and 3. In contrast, it has been found that by calculating the power difference value and the rate of change thereof, mismatches between the local power generation data and the external power generation data can be better detected, a power converter can be prevented from shut down and unnecessary power curtailment can be avoided. Furthermore, calculating the power difference value and the rate of change thereof in relation to the technical details of the at least one renewable energy source, e.g. the size of said at least one renewable energy source provides user-specific information or information specific to the at least one renewable energy source which ensures effective energy and power flow management. It has been found that, in combination with the available data on the measured at least one electrical input parameter, this may lead to improved decisions on whether and when to switch between the off-grid and on-grid modes and whether and when to connect or disconnect one or more of the at least one local loads for consuming the renewable energy locally.

As a result, the power flow or energy in the nano- or microgrid may be more effectively used, and power loss can be minimized.

As a result, the reliable and robust system according to the present disclosure may meet a demand for total use of green power and improved health management of power converters.

In embodiments according to the present disclosure, the decision making process may comprise comparing the data on the measured at least one electrical input parameter with at least one predetermined electrical input parameter threshold.

In embodiments according to the present disclosure, the control unit may be provided for, upon determining that the measured at least one electrical input parameter does not exceed the at least one predetermined electrical input parameter threshold, and/or upon determining that the rate of change of the power difference value does not exceed the predetermined rate of change threshold, operating the at least one primary switching means to connect the nano- or microgrid to said at least one phase leading to an on-grid mode of operation.

In embodiments according to the present disclosure, the control unit may be provided for, upon determining that the measured at least one electrical input parameter exceeds the at least one predetermined electrical input parameter threshold, and upon determining that the rate of change of the power difference value exceeds a predetermined rate of change threshold, operating the at least one primary switching means to disconnect the nano- or microgrid from the one or more of said at least one phase resulting in an off-grid mode of operation, and operating one or more of the at least one secondary switching means to connect one or more of the at least one renewable energy source to one or more of said at least one local load.

In embodiments according to the present disclosure, the at least one predetermined electrical input parameter threshold may be equal to or greater than 101%, 105%, 110%, 115% or 120% of a nominal voltage, preferably in the range of 105-115 % of nominal voltage, and/or may be equal to or greater than 50.1 Hz, 50.2 Hz. 50.3 Hz, 50.4 Hz or 50.5 Hz in a 50 Hz system, preferably equal to or greater than 50.2 Hz in a 50 Hz system, and/or 60.1 Hz, 60.2 Hz, 60.3 Hz, 60.4Hz, 60.5 Hz or 60.6 Hz in a 60 Hz system, preferably equal to or greater than 60.2 Hz in a 60 Hz system, and/or wherein the predetermined rate of change threshold may be equal to or greater than 1%, 2%, 5%, 7%, 10%, 12%, 15% or 20% of peak power generated by the nano- or microgrid for a specified time, e.g. peak power per minute, preferably equal to or greater than 5% of peak power per minute.

In embodiments according to the present disclosure, the external power generation data, received from the external provider, may comprise forecast power generation data comprising forecast power generation data for a predetermined period in the future and/or historical power generation data, wherein the control unit is provided for determining a prediction of at least one electrical input parameter data (i.e., prediction data of at least one electrical input parameter) for the predetermined period based on the forecast power generation data, the historical power generation data and the at least one electrical input parameter data.

In embodiments according to the present disclosure, the control unit may be further provided for operating the one or more of the at least one secondary switching means based on the predicted at least one electrical input parameter data for the predetermined period to perform pre-emptive management on one or more of the at least one local load.

In embodiments according to the present disclosure, the control unit may be provided for determining a time and a duration where the predicted at least one electrical input parameter data for the predetermined period exceeds the at least one predetermined electrical input parameter threshold; operating the one or more of the at least one secondary switching means to prepare one or more of the at least one local load, based on the determined time and duration, for example a duration of 1 hour and 15 minutes starting at a time of 12:30 pm.

Advantageously, the prediction of the at least one electrical input parameter data may allow pre-emptive management of the load(s), and thereby ensure effective preparation of the load(s) during the determined time and duration of a possible loss of power or APC in the predetermined period in the future. Thus, the system according to the present disclosure provides preventative measures for possible loss of power or APC in the predetermined period in the future.

In embodiments according to the present disclosure, the system may further comprise a power converter connectable to the wide area synchronous grid and to the nano- or microgrid, wherein the control unit is provided for, upon determining that the at least one electrical input parameter data exceeds the at least one predetermined electrical input parameter threshold and upon determining that the rate of change of the power difference value exceeds the predetermined rate of change threshold, controlling the power converter to set and/or maintain the at least one electrical output parameter of the nano- or microgrid to a nominal value.

As a result, the system according to the present disclosure may meet a demand for interactive and/or more efficient power converters to function in an on-grid mode and in an off-grid mode, thus ensuring seamless transition between the modes. Furthermore said power converters can replace local converters in the nano- or microgrids, and reduce costs when installing new renewable energy sources in nano- or microgrids without local converters, or when current local converters need to be changed/replaced.

In embodiments according to the present disclosure, the system may further comprise at least one tertiary switching means configured to connect or disconnect a local power converter comprised in the nano- or microgrid to or from the at least one renewable energy source, and to connect or disconnect the at least one renewable energy source to or from the power converter in the system, preferably to or from the power converter.

As a result, the system according to the present disclosure can reduce the costs of user in the nano- or microgrid by efficiently managing the power flow or energy in the nano- or microgrids and between the nano- or microgrids and the macrogrid, while keeping/maintaining any existing local converter(s), e.g. bypassing the local converter(s) or effectively operating said converter(s).

In embodiments according to the present disclosure, the predetermined period may be at least one of month(s), week(s), day(s), hour(s) and minute(s), for example one day ahead or in advance.

In embodiments according to the present disclosure, the control unit may be provided for adjusting at least one of the forecast power generation data and the historical power generation data based on geographical location (e.g., latitude, longitude and elevation) and technical details of the at least one renewable energy source. This means that the position of for example the solar and/or wind energy source affects how much solar radiation and/or wind energy may be collected at the ground, along with other weather conditions, such as rain, snow, cloud, and the density of air. Furthermore, the efficiency of the solar energy source, the rotation speed of the wind energy source and/or other technical details may affect the amount of solar radiation and/or wind energy collected. Thus, the decision making process and/or the prediction of data can be improved due to larger and/or enhanced datasets.

In embodiments according to the present disclosure, the system may further comprise a communication module configured to communicate data from the external provider and the inputs in the control unit.

An aspect of the present disclosure also provides a method for operating a system for managing power flow or energy in a nano- or microgrid, comprising at least one renewable energy source and at least one local load.

### Brief description of the drawings

The present disclosure will be discussed in more detail below, with reference to the attached drawings, in which:
Fig. 1 shows a schematic drawing of a system for managing power flow or energy in a nano- or microgrid operating in an on-grid mode according to the disclosure;
Fig. 2 shows a schematic drawing of a system for managing power flow or energy in a nano- or microgrid operating in an off-grid mode according to the disclosure;
Fig. 3 shows a schematic drawing of a system for managing power flow or energy in a nano- or microgrid operating in an on-grid mode according to the disclosure;
Fig. 4 shows a schematic drawing of a system for managing power flow or energy in a nano- or microgrid operating in an off-grid mode according to the disclosure;
Fig. 5 shows a schematic flow chart for operating the system of Figs. 1-4 and Figs. 6, 7 according to the disclosure;
Fig. 6 shows a schematic drawing of a system for managing power flow or energy in a nano- or microgrid and between the nano- or microgrid and a low voltage electrical grid operating in an on-grid mode according to the disclosure;
Fig. 7 shows a schematic drawing of a system for managing power flow or energy in a nano- or microgrid and between the nano- or microgrid and a low voltage electrical grid operating in an off-grid mode according to the disclosure;
Fig. 8 shows a schematic drawing of a system for managing power flow or energy in a nano- or microgrid and between the nano- or microgrid and a medium to (extra) high voltage electrical grid operating in an on-grid mode according to the disclosure;
Fig. 9 shows a schematic drawing of a system for managing power flow or energy in a nano- or microgrid and between the nano- or microgrid and a medium to (extra) high voltage electrical grid operating in an off-grid mode according to the disclosure;
Fig. 10 shows a schematic flow chart for operating the system of Figs. 8, 9 according to the disclosure.

### Description of embodiments

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B, and further the claim should be interpreted as including equivalents of those components.

Different aspects of the present disclosure will be described more fully hereinafter with reference to the enclosed drawings. The embodiments disclosed herein can, however, be realized in many different forms and should not be construed as being limited to the aspects set forth herein.

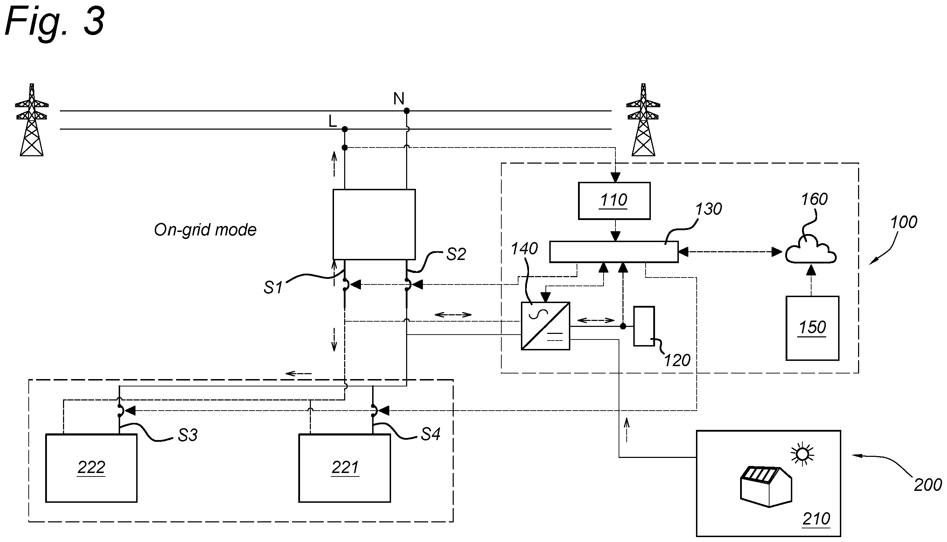

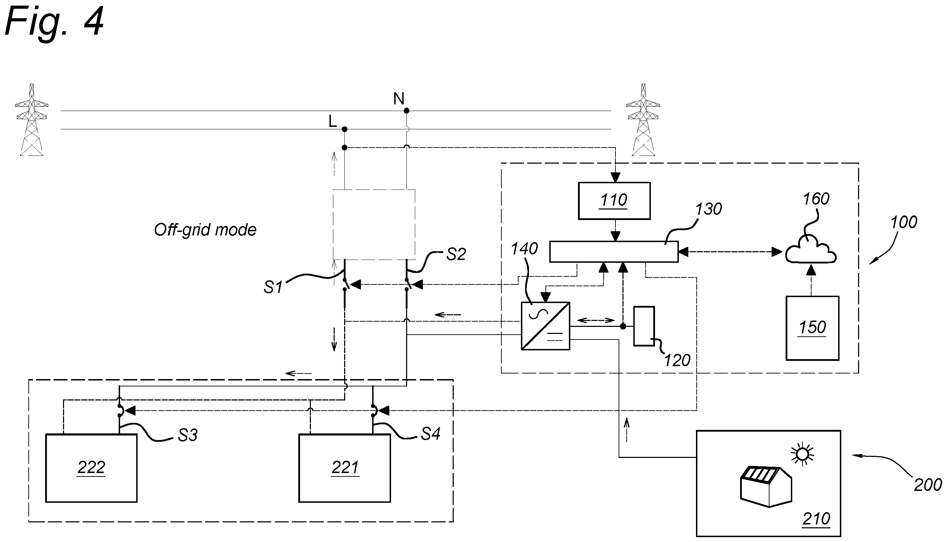

A first embodiment of a system 100 according to the disclosure will be described with reference to Figs. 3 and 4. Fig. 3 shows a schematic drawing of a system 100 for managing power flow or energy of a nano- or microgrid 200, operating in an on-grid mode. In other words, the system 100 manages the power flow or energy in the nano- or microgrid 200 and between the nano- or microgrid 200 and a wide synchronous grid for reducing or stopping unwanted/unnecessary power loss or active power curtailment (APC).

Note that the term "wide synchronous grid" also refers to the term "macrogrid", and said terms are used interchangeably herein.

The nano- or microgrid 200 comprises at least one renewable energy source 210 and at least one local load 221, 222, and the macrogrid comprises at least one phase. The system 100 comprises an input module 110, a control unit 130, at least one primary switching means S1, S2 and at least one secondary switching means S3, S4.

The input module 110 is connected to said at least one phase in the macrogrid and is configured to measure at least one electrical input parameter of the at least one phase and to provide at least one electrical input parameter data. In the embodiment of Fig. 3, the input module 110 is connected to a single phase or a single line end L. For example, a single-phase voltage measurement is a phase-to-neutral, phase-to-ground, line-to-neutral L-N or line-to-ground L-G voltage by means of a voltmeter or any other means known in the art. Additionally or alternatively, a frequency may be measured by a frequency meter or any other means known in the art. Additionally or alternatively, a current may be measured by an ammeter or any other means known in the art. Furthermore, the voltage, frequency and/or current may be measured by a multimeter, preferably a digital multimeter or a measurement sensor. The input module 110 may be connected to a neutral end N. For example, a voltage drop (also called IR drop) measurement is a neutral-ground N-GND or stray voltage to measure stray currents. In other embodiments, the input module 100 may be connected to multiple phases or multiple line ends (not shown). For example, a single-phase voltage measurement of each phase is a line-to-neutral voltage of said each phase. Moreover, the voltage measurement between the multiple phases is a line-to-line voltage.

In the embodiment of the system in Fig. 3, the control unit 130 is provided for controlling/operating the at least one primary switching means S1, S2 and the at least one secondary switching means S3, S4 based on a decision making process. Examples of the control unit 130 are: input/output (I/O) control unit, micro-controller unit (MCU), intelligent control unit/module or other units/modules used in for e.g. internet of things. This will be described in more detail below.

The at least one primary switching means S1, S2 are controlled to be closed, connecting the nano- or microgrid to the at least one phase of the macrogrid. Thus, the nano- or microgrid is operated in the on-grid mode of operation. Furthermore, one or more of the at least one secondary switches S3, S4 are controlled to be closed, connecting one or more of said at least one local load 221, 222 to the macrogrid and/or to the system 100 preferably to one or more of the at least one renewable energy source 210 through the system 100.

The at least one local load 221, 222 may comprise industrial loads 221 (e.g. more than 2 kW) and/or domestic/household loads 222 (e.g. up to 10 kW). Additionally or alternatively, the system 100 may comprise one or more batteries 120. Additionally or alternatively, the at least one local loads 221, 222 may further comprise one or more local batteries (e.g., the one or more batteries 120). Additionally or alternatively, the one or more batteries 120 in the system 100 and/or the one or more batteries in the at least one local load 221, 222 may be a battery storage system.

In the on-grid mode shown in Fig. 3, the renewable power or energy generated by the at least one renewable energy source 210 is allowed to pass through the system 100 in order to perform at least one of the following: be consumed by one or more of the at least one local load 221, 222, and/or charge the one or more local batteries (not shown) in the at least one local load 221, 222, and/or charge the one or more batteries 120 in the system 100, and/or to be injected into the macrogrid. In one instance, in case the renewable power or energy generated by the at least one renewable energy source 210 is not sufficient enough to feed the at least one local load 221, 222, power or energy stored in the one or more batteries 120 in the system 100 may be discharged into the at least one local load 221, 222.

One or more electric meters (e.g., export meter, import meter or smart meter) may be connected between the macrogrid and the system 100 and/or the nano- or microgrid 200, preferably through the primary switching means S1, S2. The one or more electric meters may be directly connected to the macrogrid. Therefore, the input module 110 may be connected to a single phase or a single line end L between the macrogrid and the one or more electric meters. Said one or more electric meters may be used to inject the renewable power or energy into the macrogrid,

The system 100 may further comprise a power converter 140 connectable to the macrogrid and to the nano- or micro grid 200. In the on-grid mode, as shown in Fig. 3, the at least one primary switching means S1, S2 are controlled to be closed, connecting the power converter 140 to the macrogrid. Furthermore, one or more of the at least one secondary switches S3, S4 are controlled to be closed, connecting one or more of said at least one local load 221, 222 to the macrogrid and/or to the power converter 140 in the system 100 preferably to one or more of the at least one renewable energy source 210 through the power converter 140 in the system 100.

Furthermore, said one or more of the at least one secondary switches S3, S4 are controlled to be closed, connecting one or more of said at least one local load 221, 222 to the macrogrid and/or to the at least one renewable energy source 210 preferably through the power converter 140.

Furthermore, said one or more batteries 120 may be connectable to the power converter 140 through switching means, such as the at least one secondary switching means S3, S4, or may always be connected to the power converter 140. In the on-grid mode shown in Fig. 3, said charging of the one or more batteries 120 in the system 100 is preferably performed through an alternating current (AC) side and/or a direct current (DC) side of the power converter 140.

The at least one renewable energy source 210 may comprise a small PV system, such as a rooftop PV system on household rooftops or commercial buildings (up to approx. 150 kW). Additionally or alternatively, the at least one renewable energy source 210 may further comprise a medium PV system (up to approx. 300 kW) in the low voltage electrical grid.

The system 100 may further comprise a server 150, which is connected to the control unit 130, is provided for communicating data and/or instructions with the control unit 130, preferably through a communication module 160 for Internet-based, WiFi-based or Bluetooth-based communication, LAN, WAN, Near Field Communication, VPN, cloud communication, etc. Other means of communication between the control unit 130 and the server 150 may include peer-to-peer networks and client-server networks. This will be described in more detail below.

Fig. 4 shows a schematic drawing of a system 100 for managing power flow or energy of a nano- or microgrid 200 operating in an off-grid mode. The system 100 of Fig. 4 corresponds in many aspects and/or features to the system 100 of the first embodiment of Fig. 3. Therefore, only the differences will be described here for the sake of brevity.

The at least one primary switching means S1, S2 are controlled to be open, disconnecting the nano- or microgrid from the at least one phase of the macrogrid. Thus, the nano- or microgrid is operated in the off-grid mode of operation. In an embodiment, the one or more electric meters may be disconnected between the macrogrid and the system 100 and/or the nano- or microgrid 200.

In the off-grid mode shown in Fig. 4, the generated renewable power is allowed to pass through system 100 in order to perform at least one of the following: be consumed by one or more of the at least one local load 221, 222, and/or charge the one or more local batteries (not shown) in the at least one local load 221, 222, and/or charge the one or more batteries 120 in the system 100. In one instance, in case the renewable power or energy generated by the at least one renewable energy source 210 is not sufficient enough to feed the at least one local load 221, 222, power or energy stored in the one or more batteries 120 in the system 100 may be discharged into the at least one local load 221, 222.

As described earlier, the system 100 may further comprise a power converter 140 connectable to the macrogrid and to the nano- or micro grid 200. Thus, in the off-grid mode shown in Fig. 4, said charging of the one or more batteries 120 in the system 100 is preferably performed through a DC side of the power converter 140.

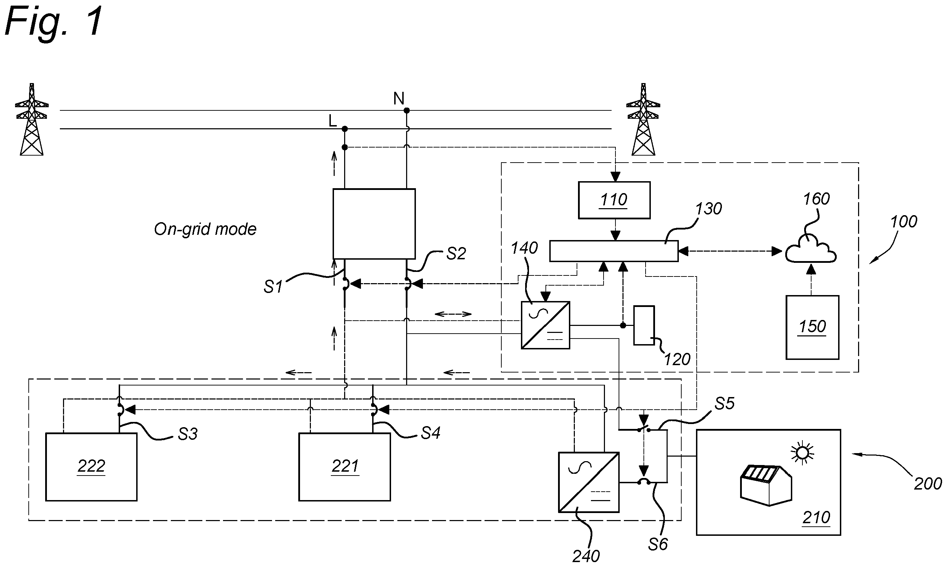

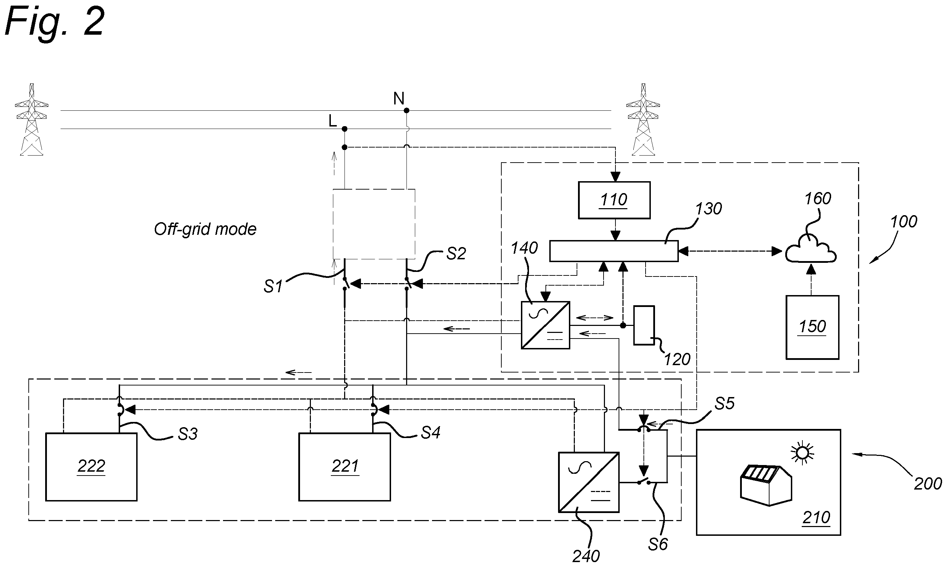

A second embodiment of a system 100 according to the disclosure will be described with reference to Figs. 1 and 2. Fig. 1 shows a schematic drawing of a system 100 for managing power flow or energy of a nano- or microgrid 200 operating in an on-grid mode. The system 100 of Fig. 1 corresponds in many aspects and/or features to the system 100 of the first embodiment of Fig. 3. Therefore, only the differences will be described here for the sake of brevity.

As shown in Fig. 1, the nano- or micro grid 200 further comprises a local power converter 240, such as a single-phase photovoltaic (PV) inverter, a multi-phase PV inverter or any other suitable power converter. Moreover, the system 100 may further comprise at least one tertiary switching means S5, S6. The control unit 130 is further provided for operating the at least one tertiary switching means S5, S6.

In the on-grid mode shown in Fig. 1, a first tertiary switching means S5 of the at least one tertiary switching means S5, S6 is controlled to be open, disconnecting the at least one renewable energy source 210 from the power converter 140 in the system 100. Thus, the renewable power generated by the at least one renewable energy source 210 is not allowed to pass through a DC side of the power converter 140. Moreover, a second tertiary switching means S6 of the at least one tertiary switching means S5, S6 is controlled to be closed, connecting the local power converter 240 to the at least one renewable energy source 210. Additionally, the one or more of the at least one secondary switches S3, S4 may be controlled to be closed to connect the one or more of said at least one local loads 221, 222 further to one or more of the at least one renewable energy source 210, preferably through the local power converter 240 in the nano- or microgrid 200.

In the on-grid mode shown in Fig. 1, the second tertiary switching means S6 is controlled to be closed to allow the generated renewable power to pass through the local power converter 240 in order to perform at least one of the following: be consumed by one or more of the at least one local load 221, 222, and/or charge the one or more local batteries (not shown) in the at least one local load 221, 222, and/or charge the one or more batteries 120 in the system 100, and/or be injected into the macrogrid. Said charging of the one or more batteries 120 in the system 100 is preferably performed through an AC side of the power converter 140. In one instance, in case the renewable power or energy generated by the at least one renewable energy source 210 is not sufficient enough to feed the at least one local load 221, 222, power or energy stored in the one or more batteries 120 in the system 100 may be discharged into the at least one local load 221, 222.

Fig. 2 shows a schematic drawing of a system 100 for managing power flow or energy of a nano- or microgrid 200 operating in an off-grid mode. The system 100 of Fig. 2 corresponds in many aspects and/or features to the system 100 of the second embodiment of Fig. 1. Therefore, only the differences will be described here for the sake of brevity.

The at least one primary switching means S1, S2 are controlled to be open, disconnecting the nano- or microgrid from the at least one phase of the macrogrid. Thus, the nano- or microgrid is operated in the off-grid mode of operation. Furthermore, one or more of the at least one secondary switches S3, S4 are controlled to be closed, connecting one or more of said at least one local load 221, 222 to the system 100.

As described earlier, the system 100 may further comprise a power converter 140 connectable to the macrogrid and to the nano- or micro grid 200. In the off-grid mode, as shown in Fig. 2, the at least one primary switching means S1, S2 are controlled to be open, disconnecting the power converter 140 from the macrogrid.

In the off-grid mode shown in Fig. 2, the first tertiary switching means S5 of the at least one tertiary switching means S5, S6 is controlled to be closed, connecting the at least one renewable energy source 210 to the power converter 140 in the system 100. Moreover, the second tertiary switching means S6 of the at least one tertiary switching means S5, S6 is controlled to be open, disconnecting the local power converter 240 from the at least one renewable energy source 210. Furthermore, the one or more of the at least one secondary switches S3, S4 may be controlled to be closed to connect the one or more of said at least one local loads 221, 222 to one or more of the at least one renewable energy source 210, preferably to the local power converter 240. Thus, the produced renewable power is allowed to pass through the DC side of the power converter 140 in order to perform at least one of the following: be consumed by one or more of the at least one local load 221, 222, and/or charge the one or more local batteries (not shown) in the at least one local load 221, 222, and/or charge the one or more batteries 120 in the system 100. In one instance, in case the renewable power or energy generated by the at least one renewable energy source 210 is not sufficient enough to feed the at least one local load 221, 222, power or energy stored in the one or more batteries 120 in the system 100 may be discharged into the at least one local load 221, 222.

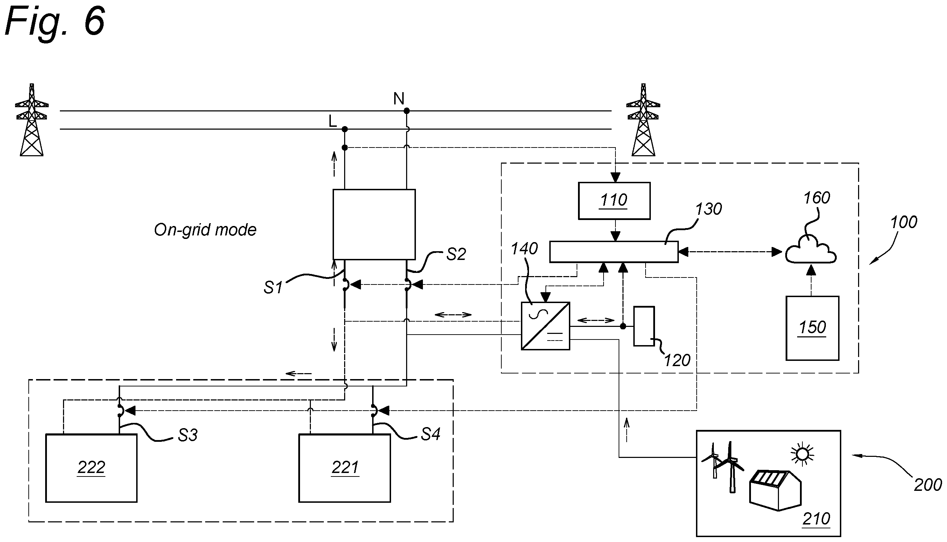

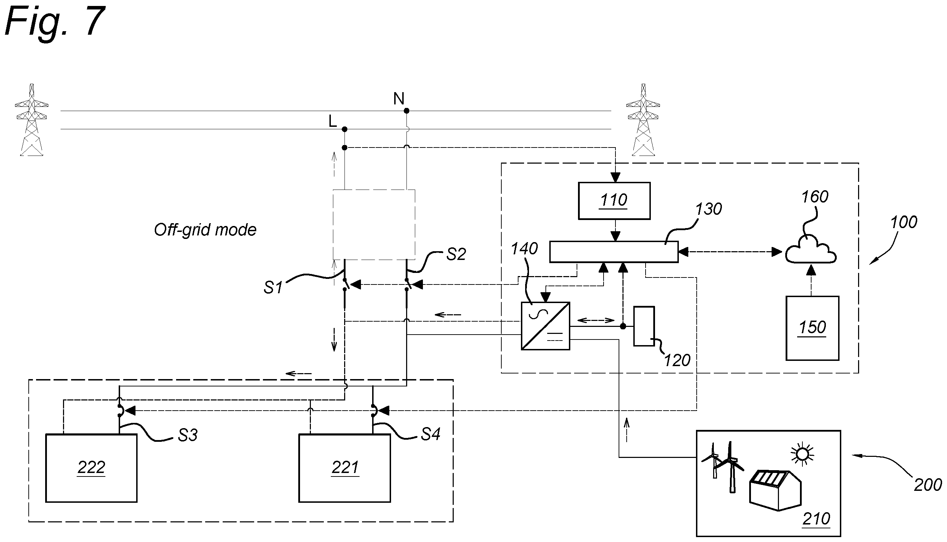

A third embodiment of a system 100 according to the disclosure will be described with reference to Figs. 6 and 7. Fig. 6 shows a schematic drawing of a system 100 for managing power flow or energy of a nano- or microgrid 200 operating in an on-grid mode. The system 100 of Fig. 6 corresponds in many aspects and/or features to the system 100 of the first embodiment of Fig. 3. Therefore, only the differences will be described here for the sake of brevity.

The at least one renewable energy source 210 may comprise a wind turbine system, such as one or more small wind turbines, generating power up to approx. 150 kW. Furthermore, the at least one renewable energy source may additionally or alternatively comprise a small PV system, as described above and/or a medium wind turbine system and/or a medium PV system (up to approx. 300 kW) in the low voltage electrical grid.

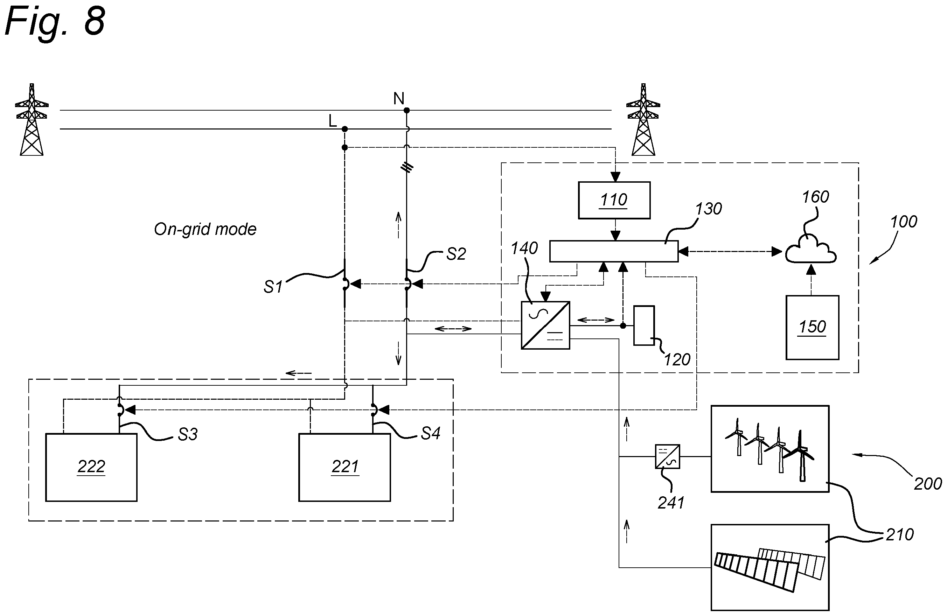

Note that the wind turbine system described above may output direct current (DC) power, and, thus may not require a wind turbine power converter to convert said DC power into alternating current (AC) power. However, in a scenario where said wind turbine system outputs AC power, a wind turbine power converter may be used to connect the wind turbine system to the system 100, preferably to the power converter 140. An example embodiment referring to Fig. 8 is described below.

Fig. 7 shows a schematic drawing of a system 100 for managing power flow or energy of a nano- or microgrid 200 operating in an off-grid mode. The system 100 of Fig. 7 corresponds in many aspects and/or features to the system 100 of the first embodiment of Fig. 4. Therefore, only the differences will be described here for the sake of brevity.

The at least one renewable energy source 210 may comprise a wind turbine system, such as one or more small wind turbines, generating power up to approx. 150 kW. Furthermore, the at least one renewable energy source may additionally or alternatively comprise a small PV system, as described above and/or a medium wind turbine system and/or a medium PV system (up to approx. 300 kW) in the low voltage electrical grid.

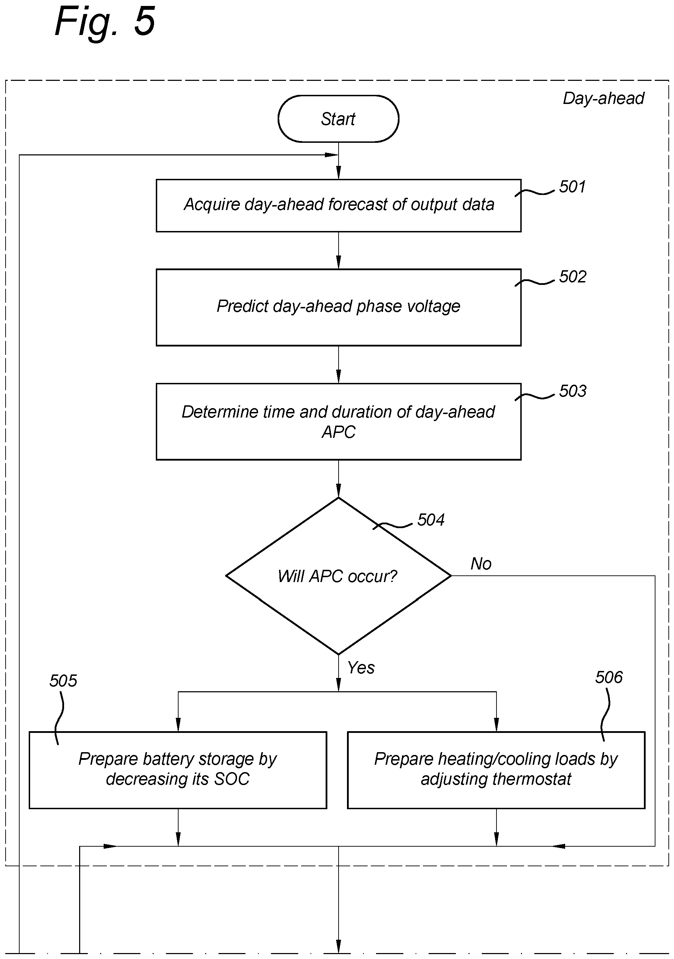

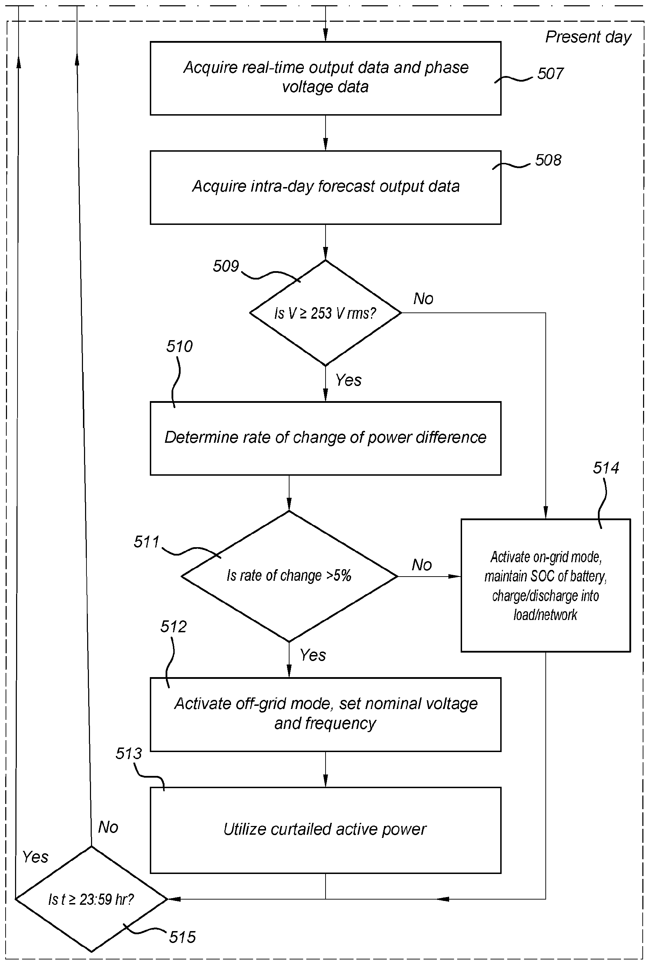

Embodiments of operating a system 100 according to the disclosure will be disclosed with reference to Fig. 5. Fig. 5 shows a schematic flow chart for operating the system of Figs. 1-4 and Figs. 6, 7 according to the disclosure.

### Present day

The afore-described control unit 130 in the system 100 has inputs for receiving or acquiring local power generation data from the power converter 140 and/or a unit within the nano- or microgrid 200. Said unit within the nano- or microgrid 200 may be the local converter 240 or any other unit which measures the power actually generated by means of said at least one renewable energy source 210. Another term for "local power generation data" may be "real-time output data". An example is shown in step 507 of Fig. 5, where the local power generation data is real-time data generated by a PV system, preferably at a predetermined interval, such as per one or more milliseconds, one or more seconds and/or one or more minutes.

Furthermore, the control unit 130 has inputs for receiving, from the input module 110, at least one electrical parameter measured by the input module 110, preferably at a predetermined interval, such as per one or more milliseconds, one or more seconds and/or one or more minutes. As described above, the at least one electrical parameter may be (single and/or multiple) phase voltage, frequency, current and/or other parameters generally known in the art.

The server 150 may comprise inputs to additionally or alternatively receive the local power generation data and/or the measured at least one electrical input parameter (as shown in step 507). Said data and/or measured parameter(s) may be stored in a memory in the server 150.

Furthermore, the control unit 130 and/or the server 150 receive(s) external power generation data from an external provider, such as a power grid system operator like Elia in Belgium, the European Network of Transmission System Operators for Electricity (ENTSO-E) or other operators/platforms that provide external power generation data. Said external power generation data is a representative of the power that theoretically should be generated by mean of said at least one renewable energy source 210 based on external factors, such as weather conditions (e.g, temperature, atmospheric density, barometric pressure, humidity, precipitation, solar radiation, wind, etc.), geographical location, technical details of the at least one renewable energy source (e.g. design, size, peak power generation, etc.), and/or other factors known in the art.

The local power generation data and/or the at least one electrical parameter may be preferably received by the inputs of the control unit 130 and/or the server 150 at the beginning of the current day, such as 00:00h.

The external power generation data comprises forecast power generation data for one or more predetermined periods, such as intra-day (e.g., one or more seconds in advance, one or more minutes in advance and/or one or more hours in advance), one or more days ahead (e.g., day-ahead), one or more weeks ahead (e.g., fortnight), and/or one or more months ahead. For example, the external power generation data comprises intra-day forecast of PV output data updated at 08:00, 11:00, 14:00 and 16:00 during the day (see step 508 of Fig. 5), and may further comprise day-ahead forecast of PV output data (see e.g., step 501 of Fig. 5).

The system 100 may further comprise a communication module 160 configured to communicate data from the external provider to the inputs in the control unit 130. Said communication module 160 may be alternatively or additionally configured to communicate data from the external provider to the inputs of the server 150. Furthermore, the communication module 160 may provide communication of data between the server 150 and the control unit 130.

The control unit 130 may adjust at least one of the external power generation data and the local power generation data in accordance with the geographical location and technical details of the at least one renewable energy source 210. Additionally or alternatively, the control unit 130 may adjust said data by interpolating and/or extrapolating values/points in the data to increase a size of the data.

In an alternative embodiment, the local power generation data, external power generation data and/or the measured at least one electrical input parameter may be transmitted from the server 150 to the control unit 130. Furthermore, said data and/or measured parameter(s) may be stored in a memory in the server 150, and transmitted from said memory.

In a further alternative embodiment, the server 150 may adjust at least one of the external power generation data and the local power generation data in accordance with the geographical location and technical details of the at least one renewable energy source 210 before being transmitted to the control unit 130.

The control unit 130 is provided for operating a decision making process based on the measured at least one electrical input parameter. The decision making process may comprise comparing the measured at least one electrical input parameter with at least one predetermined electrical input parameter threshold. For example, the control unit 130 determines whether the network voltage exceeds an upper limit of 1.10 per unit or 253 V rms (see step 509 of Fig. 5).

The control unit 130 is further provided for operating one or more of the at least one primary switching means S1, S2 and the at least one secondary switching means S3, S4 based on a result of the decision making process.

In preferred embodiments, the result of the decision making process may comprise that the measured at least one electrical parameter does not exceed the predetermined electrical input parameter threshold. Thus, the control unit 130 may be provided for, upon determining that the measured at least one electrical input parameter does not exceed the predetermined electrical input parameter threshold, operating the at least one primary switching means S1, S2 to close, connecting the nano- or microgrid to the at least one phase in the macrogrid, thereby activating an on-grid mode (see step 514 of Fig. 5). Additionally, the control unit 130 may control/operate one or more of the secondary switching means S3, S4 and/or one or more of the tertiary switching means S5, S6 allowing the system 100 to perform at least one of the following: supply/transport power generated by the at least one renewable energy source 210 into one or more of the at least one local load 221, 222 to be consumed, and/or inject said generated power into the macrogrid, and/or maintain a state of charge (SOC) of the one or more local batteries in the at least one local load 221, 222 and/or the one or more batteries 120 in the system 100.

The control unit 130 is further provided for calculating a power difference value based on the received local power generation data and the external power generation data, preferably upon determining that the measured at least one electrical input parameter exceeds the predetermined electrical input parameter threshold. Said power difference value is related to the technical details of the at least one renewable energy source 210, particularly the size of said at least one renewable energy source 210. Furthermore, said power difference value takes into account that a portion of the generated power may be locally consumed and is not injected into the macrogrid. For example, a portion of the generated power may be lost in a local converter comprised in the nano- or microgrid, therefore, the power difference value is the difference between real-time production before injected/consumed in the macrogrid/loads and predicted power production. The control unit 130 is provided to determine a rate of change of the power difference value. For example, the control unit 130 compares and computes the rate of change of difference between real-time PV output data and forecast PV output data (see step 510 of Fig. 5).

The control unit 130 is provided for operating the decision making process further based on the rate of change of the power difference value. The decision making process may further comprise comparing the determined rate of change of said power difference value with a predetermined rate of change threshold. For example, the control unit 130 determines whether the rate of change of difference in power exceeds an upper limit of 5% peak power, e.g., PV rating per minute (see step 511 of Fig. 5).

In embodiments, the decision making process may be improved by increasing the size of the data, such as by interpolation and/or extrapolation of the local power generation data and/or the external power generation data or any other processes known in data analysis for imputing and/or inferring missing and/or additional data.

In preferred embodiments, the result of the decision making process may comprise that the rate of change of the power difference value does not exceed the predetermined rate of change threshold. The result of the decision making process may further comprise that the measured at least one electrical input parameter exceeds the predetermined electrical input parameter threshold. Thus, the control unit 130 may be provided for, upon determining that the rate of change of the power difference value does not exceed the predetermined rate of change threshold, operating the at least one primary switching means S1, S2 to close, connecting the nano- or microgrid to the at least one phase in the macrogrid, thereby activating the on-grid mode (see step 514 of Fig. 5) as discussed above. Additionally, the control unit 130 may control/operate one or more of the secondary switching means S3, S4 and/or one or more of the tertiary switching means S5, S6 allowing the system 100 to perform at least one of the following: supply/transfer power generated by the at least one renewable energy source 210 into one or more of the at least one local load 221, 222 to be consumed, and/or inject said generated power into the macrogrid, and/or maintain a state of charge (SOC) of the one or more local batteries in the at least one local load 221, 222 and/or the one or more batteries 120 in the system 100.

In preferred embodiments, the result of the decision making process may comprise that the rate of change of the power difference value exceeds the predetermined rate of change threshold. The result of the decision making process may further comprise that the measured at least one electrical input parameter exceeds the predetermined electrical input parameter threshold. Thus, the control unit 130 may be provided for, upon determining that the rate of change of the power difference value exceeds the predetermined rate of change threshold, operating the at least one primary switching means S1, S2 to open, disconnecting the nano- or microgrid from the at least one phase in the macrogrid, thereby activating the off-grid mode (see step 512 of Fig. 5). As has been discussed above, in the off-grid mode, the control unit 130 may operate one or more of the at least one secondary switching means S3, S4 to connect one or more of the at least renewable energy source 210 to one or more said at least one local load. In some embodiments, wherein the nano- or microgrid comprises a local power converter 240, the control unit 130 may operate the at least one tertiary switching means S5, S6 to connect the local power converter 240 to the at least one renewable energy source 210 (see above, for example the second embodiment of Fig. 2).

In the off-grid mode, the generated renewable power is allowed to pass through system 100, preferably through the power converter 140, in order to perform at least one of the following: be consumed by one or more of the at least one local load 221, 222, and/or charge the one or more local batteries in the at least one local load 221, 222, and/or charge the one or more batteries 120 in the system 100 (see step 513 of Fig. 5). In one instance, in case the renewable power or energy generated by the at least one renewable energy source 210 is not sufficient enough to feed the at least one local load 221, 222, power or energy stored in the one or more batteries 120 in the system 100 may be discharged into the at least one local load 221, 222.

Furthermore, in the off-grid mode, the system 100 may set and/or maintain at least one nominal value to the at least one electrical input parameter of the nano- or microgrid 200. Preferably, the power converter 140 may set and/or maintain said at least one nominal value (see step 512 of Fig. 5). The control unit 130 may control the power converter 140 to set and/or maintain said at least one nominal value. Examples of nominal values are a single-phase nominal voltage, such as 230 V (in Europe, most of Africa, most of Asia, much of South America and Australia) and 120 V (in North America), and a nominal frequency, such as 50 Hz (in Europe, most of Africa, most of Asia, much of South America and Australia) and 60 Hz (in North America). Other single-phase nominal voltages, such as 110 V, 115 V, 127 V, 220 V, 240 V may be considered. Further examples of nominal values is multiple phase nominal voltages, such as the following three-phase nominal voltages, which may be equivalent to the above-mentioned single-phase voltages, such as 115/230 V, 120/208 V, 120/240 V, 127/220 V, 227/480 V, 230/400V, 240/415 V, 240/480 V, 347/600 V, 190 V, 208 V, 230 V, 240 V, 380 V, 400 V, 415 V, 440 V, 460 V, 480 V.

In alternative embodiments, the server 150 may operate the decision making process as described above for the control unit 130. Additionally, a result of said decision making process, as described above, may be transmitted by the server 150 to the control unit 130 to operate one or more of the at least one primary switching means S1, S2, the at least one secondary switching means S3, S4, and the at least one tertiary switching means S5, S6.

The control unit 130 may further determine whether a current time, such as time of operation or time of day, has exceeded a predetermined time threshold. Said predetermined time threshold may be the end of the day, such as 23:59h (see step 515 of Fig. 5). Upon determining that the current time has not exceeded the predetermined time threshold, the control unit 130 is further provided to perform any of the above described steps 507-515.

### Day-ahead

The control unit 130 may be provided for receiving through its inputs, forecast power generation data for a predetermined period in the future, and historical power generation data from the external provider as described above. The forecast power generation data may be preferably received a day-ahead, e.g. before the end of the day at the latest 23:59h (see step 501 of Fig. 5). Preferably, the control unit 130 may receive the external power generation data (as described above) further comprising the historical power generation data. The control unit 130 may be provided for generating historical power generation data based on previously received external power generation data.

The historical power generation data may comprise data relating to previously forecasted power generation data for a predetermined period in the past. For example, all the forecasted power generation data in the past days, months and/or years. Additionally or alternatively, the historical power generation data may comprise data relating to previously received local power generation data from the unit within the nano- or microgrid, which may be stored in a memory unit (not shown) in the system 100.

Furthermore, the control unit 130 may further receive at least one electrical input parameter data provided by the input module 110. Said at least one electrical input parameter data may comprise historical at least one electrical input parameter data relating to previously measured at least one electrical input parameter for a predetermined period in the past. For example, the measured at least one electrical input parameter in the past days, months and/or years. Said data may be stored in an integrated memory in the input module 110 and/or in a memory unit in the system 100. The control unit 130 may receive said data in parts or in full from at least one said integrated memory in the input module 110, said memory unit in the system 100 and the input module 110.

In embodiments, the control unit 130 may adjust the forecast power generation data and/or the historical power generation data, preferably the external power generation data, in accordance with the geographical location and technical details of the at least one renewable energy source 210.

The server 150 may be additionally or alternatively provided for receiving through its inputs, the forecast power generation data from the external provider for a predetermined period in the future, the historical power generation data from the external provider, and/or the at least one electrical input parameter data in parts or in full from at least one said integrated memory in the input module 110, said memory unit in the system 100 and the input module 110. Said data may be transmitted from the server 150 to the control unit 130. Furthermore, said data and/or measured parameter(s) may be stored in a memory in the server 150, and transmitted from said memory to the control unit 130.

In a further alternative embodiment, the server 150 may adjust at least one of the forecast power generation data and the historical power generation data, preferably the external power generation data, in accordance with the geographical location (e.g., latitude, longitude and elevation) and technical details of the at least one renewable energy source 210 before being transmitted to the control unit 130. This means that the position of for example the solar and/or wind energy source affects how much solar radiation and/or wind energy may be collected at the ground, along with other weather conditions, such as rain, snow, cloud, and the density of air. Furthermore, the efficiency of the solar energy source, the rotation speed of the wind energy source and/or other technical details may affect the amount of solar radiation and/or wind energy collected. Thus, the decision making process and/or the prediction of data can be improved due to larger and/or enhanced datasets.

In embodiments, the control unit 130 may be further provided for determining a prediction of at least one electrical input parameter data for the predetermined period in the future based on the forecast power generation data and the historical data, received and/or adjusted as described above, as well as the at least one electrical input parameter data. In other words, the control unit 130 may provide forecast at least one electrical input parameter data for a similar or the same predetermined period in the future for which a forecast power generation data is provided. For example, the forecast at least one electrical input parameter may be provide a day in advance (see step 502 of Fig. 5). Other predetermined periods may be used as described above (intra-day, one or more days ahead, one or more weeks ahead, etc.).

The control unit 130 may further operate or control one or more of the at least one secondary switching means based on the predicted or forecast at least one electrical input parameter data for the predetermined period to perform pre-emptive management on one or more of the at least one local load 221, 222 and/or the one or more batteries 120 in the system 100. An example of pre-emptive management is preparing a heating/cooling loads (e.g. domestic/industrial air conditioning system, electric heater/coolers, etc.) by adjusting a thermostat (see step 506 of Fig. 5). Another example is preparing one or more local batteries in the at least one local load 221, 222 and/or one or more batteries 120 in the system 100 by decreasing a state of charge (SOC) of said one or more (local) batteries by a predetermined rate for a predetermined duration, e.g. kWp PV rating x duration of day-ahead APC (see step 505 of Fig. 5). This will be explained in more detail below.

The control unit 130 may be provided for determining a time and a duration of a possible power loss or APC based on the predicted or forecast at least one electrical input parameter data (see step 503 of Fig. 5). In other words, the time and duration may be determined based on whether the predicted or forecast at least one electrical input parameter data for the predetermined period in the future exceeds the at least one predetermined electrical input parameter threshold.

In some embodiments, the control unit 130 may determine for example whether power may be lost or APC may occur in the predetermined period in the future (see step 504 of Fig. 5). Said determination may be based on the determined time and/or the determined duration, preferably based on whether the determined duration exceeds a predetermined duration threshold and/or whether the determined time is in a predetermined time frame. The predetermined duration threshold may be one or more milliseconds, one or more seconds, one or more minutes and/or one or more hours. For example, if the determined time is during peak sun hours (e.g. 10:00 to 14:00) and if the determined duration exceeds 5 minutes, then the control unit 130 determines that a power loss or APC may occur. Other values of the predetermined time frame may be any time frame between 00:00 to 24:00 depending on the geographical location.

Furthermore, the control unit 130 may alternatively or additionally determine a probability of whether power may be lost or whether APC may occur based on the determined time and/or the determined duration, preferably based on whether the determined duration exceeds a predetermined duration threshold and/or whether the determined time is in a predetermined time frame. Thus, the determining whether power may be lost or whether APC may occur may be additionally or alternatively based on whether said probability exceeds a predetermined probability threshold. Said threshold may be larger than or equal to 30%, 40%, 50%, 60%, 70%, 80% or 90%.

In alternative embodiments, the control unit 130 may operate the decision making process comprising determining whether power may be lost or whether APC may occur in the predetermined period in the future based on the determined time and/or the determined duration, preferably based on a result of the decision making process whether the determined duration exceeds a predetermined duration threshold and/or whether the determined time is in a predetermined time frame.

The decision making process may alternatively or additionally comprise determining a probability of whether power may be lost or whether APC may occur based on the determined time and/or the determined duration, preferably based on whether the determined duration exceeds a predetermined duration threshold and/or whether the determined time is in a predetermined time frame, as described above for the control unit 130.

The pre-emptive management prepares the one or more of the at least one local load 221, 222 and/or the one or more batteries 120 in the system 100 to be used in the on-grid mode when power loss or APC is determined to occur (e.g., the result of the decision making process as described above) to consume the renewable power or energy generated by the at least one renewable energy source 210 (i.e., by one or more of the at least one local load 221, 222), to charge the one or more local batteries in the at least one local load 221, 222 and/or to charge the one or more batteries 120 in the system 100. As a result power loss or APC is avoided.

The control unit 130 may operate or control the at least one secondary switching means to pre-emptively manage or prepare the one or more of the at least one local load 221, 222 and/or the one or more batteries 120 in the system 100 based on the determined time and/or the determined duration. Upon determining that power loss or APC will occur, the control unit 130 may operate or control the at least one secondary switching to close, connecting the one or more of the at least one local load 221, 222 and/or the one or more batteries 120 in the system 100 to the macrogrid. The one or more local batteries in the at least one local load 221, 222 and/or the one or more batteries 120 in the system 100 may be discharged, preferably into the macrogrid and/or one or more of the at least one local load 221, 222.

Note that the size of the one or more local batteries and/or the one or more batteries 120 are large enough to be able to be discharged at the predetermined rate for the determined duration in order to avoid power loss or APC. Said predetermined rate is relative to the maximum capacity of the one or more (local) batteries, and may be a discharge current in the range between 0.1-8C rates and/or a discharge power in the range between 0.1-8E rates, preferably in the any other range in between 0.1-8C and/or 0.1-8E rates. Other values of the predetermined rate may be considered based on the type of battery.

The at least one predetermined electrical input parameter threshold may be a predetermined voltage threshold equal to or greater than 101%, 105%, 110%, 115% or 120% of a nominal voltage, preferably in the range of 105-115% such as 253 V rms in a 230 V system, and/or may be a predetermined frequency threshold may be equal to or greater than 100.3%, 100.5%, 100.8%, 101%, 101.3% 101.5%, 101.8% or 102% of a nominal frequency, preferably in the range of 100.3-100.5%, such as 50.2 Hz in a 50 Hz system or 60.2 Hz in a 60 Hz system. Other at least one predetermined electrical input parameter thresholds such as a predetermined current threshold and/or a predetermined power threshold may additionally or alternatively be considered, said thresholds may be related to wiring regulations of regions or countries and/or on the type of at least one local load 221, 222, and may be in the range of 100.3-115% of a specified nominal value.

The predetermined rate of change threshold may be equal to or greater than 1%, 2%, 5%, 7%, 10%, 12%, 15% or 20%, preferably equal to or greater than 5% of peak power (Wp) rating generated by the nano- or microgrid 200 per minute, preferably by the at least one renewable energy source 210. The peak power is related to the size and/or design of the at least one renewable energy source 210. We refer to Table 1 below relating to examples of rate of decrease of local power generation data in a PV system (i.e., real-time PV output) equal to or greater than 5% and 10% Wp per minute.

Table 1 - Rate of decrease of local power generation data

| Rate of decrease of real-time PV output | | |
|---|---|---|
| PV installation rating (Wp) | Rate of decrease PV output (5% Wp/per minute | Rate of decrease PV output (10% Wp/per minute |
| 5000 | >250 Wp/min | >500 Wp/min |
| 4000 | >200 Wp/min | >400 Wp/min |
| 3000 | >150 Wp/min | >300 Wp/min |
| 2000 | >100 Wp/min | >200 Wp/min |
| 1000 | >50 Wp/min | >100 Wp/min |
| 500 | >25 Wp/min | >50 Wp/min |

The examples shown in Table 1 may also apply to wind turbines or other renewable energy sources, relating to a rate of decrease of real-time power output (i.e., local power generation data).

As described above, the control unit 130 may further determine whether a current time, such as time of operation or time of day, has exceeded a predetermined time threshold. Upon determining that the current time has exceeded the predetermined time threshold, the control unit 130 is further provided to perform any of the above described steps 501-515 as described above.

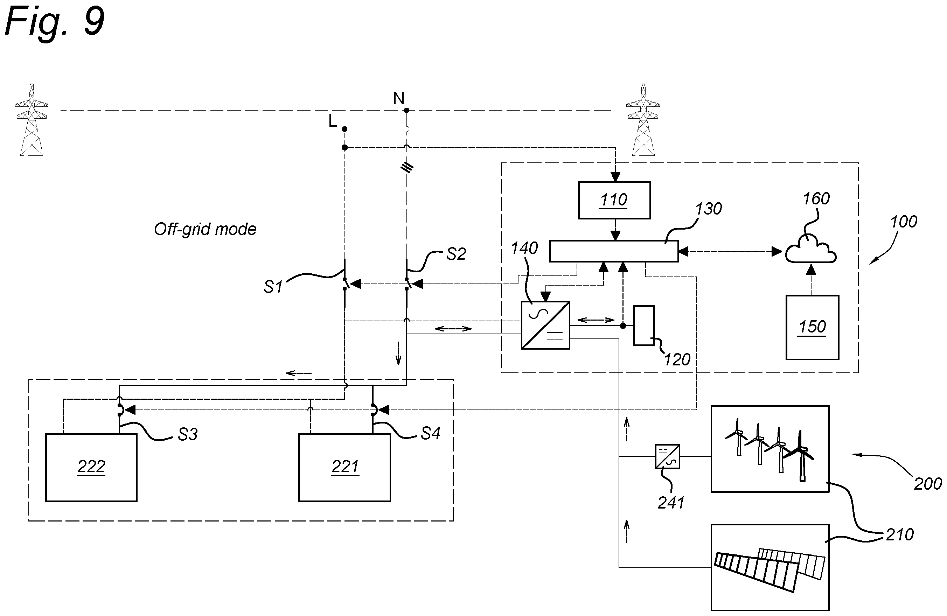

A fourth embodiment of a system 100 according to the disclosure will be described with reference to Figs. 8 and 9. Fig. 8 shows a schematic drawing of a system 100 for managing power flow or energy of a nano- or microgrid 200 operating in an on-grid mode. The system 100 of Fig. 8 corresponds in many aspects and/or features to the system 100 of the first embodiment of Fig. 3. Therefore, only the differences will be described here for the sake of brevity.

The at least one renewable energy source 210 may comprise at least one large wind turbine and/or a small/medium wind power plant generating power up to approx. 1-5 MW, a large onshore wind turbine power plant generating power up to approx. 100 MW, and/or large offshore wind farms generating up to approx. 0.5 GW. Furthermore, the at least one renewable energy source may alternatively or additionally comprise a large PV system and/or a small/medium solar power plant generating power up to approx. 1-5 MW, a large solar farm generating power up to approx. 100 MW, a large offshore wind farm and/or a very large solar farm generating up to approx. 1.5 GW, and/or an extra-large wind/solar farm generating more than 1.5 GW.

The wind turbines, power plants and/or farms described above may output AC power, and thus a wind turbine power converter 241 may be used to connect said wind turbines, power plants and/or farms to the system 100, preferably to the power converter 140. As shown in Fig. 8, the wind turbines, power plants and/or farms are connected to an AC side of the wind turbine power converter 241 and the system 100 is connected to a DC side of the wind turbine power converter 241. Preferably, the DC sides of the wind turbine power converter 241 and the power converter 140 are connected to each other. Furthermore, the solar systems, power plants and/or farms are connected to the system 100, preferably to the power converter 140, particularly to the DC side of the power converter 140.

In an embodiment, the system 100 may further comprise a local power converter as described in the system 100 of Fig. 1. The output(s) of the at least one renewable energy source 210 may be connectable to the local power converter 240. For example, the solar systems, power plants and/or farms may be connectable to the DC side of the local power converter 240 and/or the DC side of the wind turbine power converter 241 may be connectable to the DC side of the local power converter 240. The system 100 may further comprise tertiary switching means S5, S6 (not shown) as disclosed in the system 100 of Fig. 1.

Fig. 9 shows a schematic drawing of a system 100 for managing power flow or energy of a nano- or microgrid 200 operating in an off-grid mode. The system 100 of Fig. 9 corresponds in many aspects and/or features to the system 100 of the first embodiment of Fig. 4. Therefore, only the differences will be described here for the sake of brevity.

The at least one renewable energy source 210 may comprise at least one large wind turbine and/or a small/medium wind power plant generating power up to approx. 1-5 MW, a large onshore wind turbine power plant generating power up to approx. 100 MW, and/or large offshore wind farms generating up to approx. 0.5 GW. Furthermore, the at least one renewable energy source may alternatively or additionally comprise a large PV system and/or a small/medium solar power plant generating power up to approx. 1-5 MW, a large solar farm generating power up to approx. 100 MW, a large offshore wind farm and/or a very large solar farm generating up to approx. 1.5 GW, and/or an extra-large wind/solar farm generating more than 1.5 GW.

The wind turbines, power plants and/or farms described above may output AC power, and thus a wind turbine power converter 241 may be used to connect said wind turbines, power plants and/or farms to the system 100, preferably to the power converter 140. As shown in Fig. 9, the wind turbines, power plants and/or farms are connected to an AC side of the wind turbine power converter 241 and the system 100 is connected to a DC side of the wind turbine power converter 241. Preferably, the DC sides of the wind turbine power converter 241 and the power converter 140 are connected to each other. Furthermore, the solar systems, power plants and/or farms are connected to the system 100, preferably to the power converter 140, particularly to the DC side of the power converter 140.

In an embodiment, the system 100 may further comprise a local power converter as described in the system 100 of Fig. 2. The output(s) of the at least one renewable energy source 210 may be connectable to the local power converter 240. For example, the solar systems, power plants and/or farms may be connectable to the DC side of the local power converter 240 and/or the DC side of the wind turbine power converter 241 may be connectable to the DC side of the local power converter 240. The system 100 may further comprise tertiary switching means S5, S6 (not shown) as disclosed in the system 100 of Fig. 2.

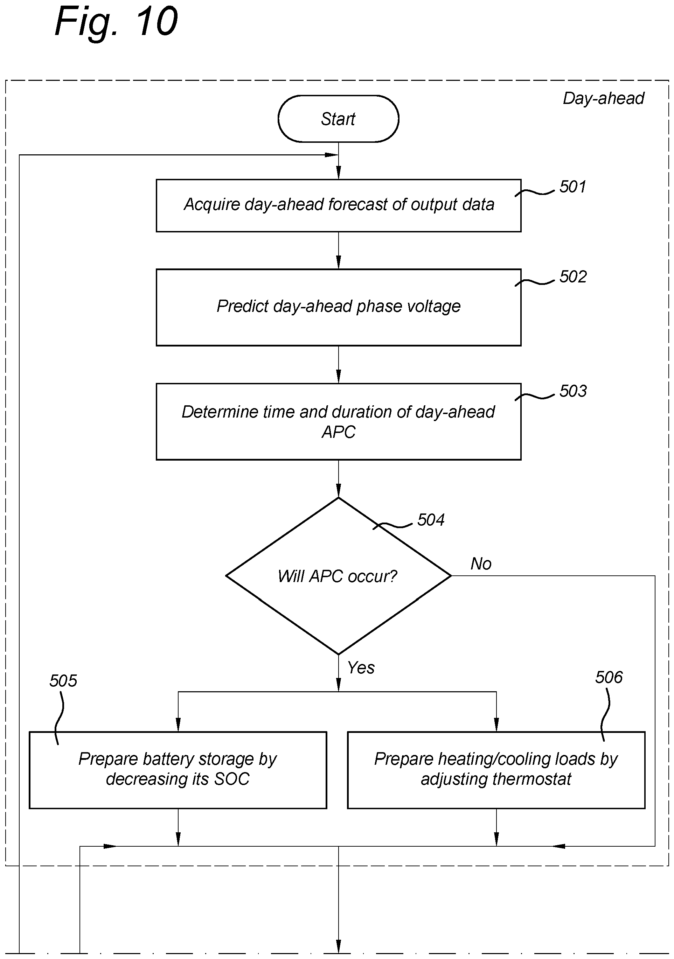

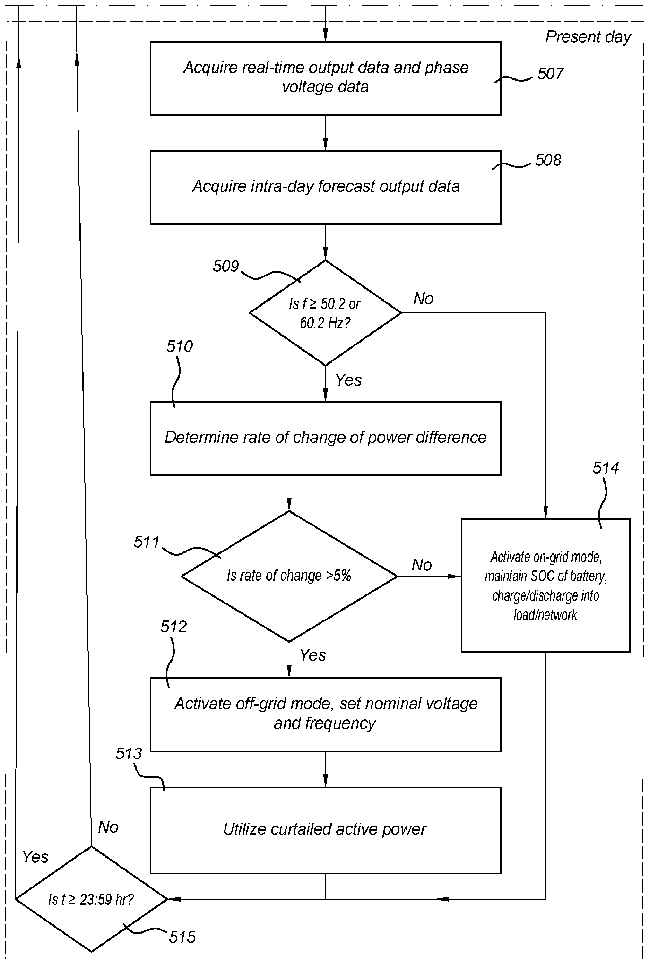

Embodiments of operating a system 100 according to the disclosure will be disclosed with reference to Fig. 10. Fig. 10 shows a schematic flow chart for operating the system of Figs. 8, 9 according to the disclosure.

The control unit 130 is provided for operating a decision making process based on the measured at least one electrical input parameter. The decision making process may comprise comparing the measured at least one electrical input parameter with at least one predetermined electrical input parameter threshold. For example, the control unit 130 determines whether the network frequency exceeds an upper limit of 50.2 Hz in a 50 Hz system or 60.2 Hz in a 60 Hz system (see step 509 of Fig. 10).

### Exam ples

In what follows, examples of the decision making process being operated by the control unit 130 and/or the server 150 based on the measured at least one electrical input parameter, preferably in combination with the local and/or external power generation data. In these examples a comparison is made between a decision based on the phase voltage data only and a decision based on the phase voltage data, the PV power generation data from an external provider and the real-time PV output data from local unit.

First, examples are provided for scenarios/situations in which the decision making process is based only on the at least one electrical parameter (e.g., voltage and/or frequency). We refer to Table 2 below relating to examples of unwanted/unnecessary APC in a PV system of a local converter 240 (e.g., PV inverter) when only voltage is considered.

**Table 2 - Decision based on the at least one electrical input parameter**

| | Decision based on Voltage only | |
|---|---|---|
| | Situation | Outcome |
| 1 | Rise in voltage momentarily to network voltage upper limit (for e.g. rise to 253 V for 2-3 minutes and then goes back below this limit) | The PV inverter will curtail its power and shutdown, although the inverter should not be curtailed because the rise in voltage is momentarily due to temporary factors such as temporary increase in PV power production . |
| 2 | Rise in voltage due to short circuit in phase(s) other than the phase where PV inverter is connected | The PV inverter will curtail its power and shutdown, although the inverter should not be curtailed because the rise in voltage is due to short circuit in other phase(s) which is momentarily/temporary and will come back to nominal value as soon as the fault is cleared. |
| 3 | Rise in voltage due to unbalanced loading of the phase(s) | The PV inverter will curtail its power and shutdown depending upon the level of loading, although the inverter should not be curtailed because the rise in voltage is due to unbalanced loading of other phase(s) which can be momentarily/temporary and will go away once the loading is removed. |
| 4 | Rise in voltage for PV owners located at the end of the feeder | The PV inverter will curtail its power and shutdown depending upon the location of the PV owner on the feeder, which means that the farther the PV owner from the substation transformer, the bigger and the earlier is the curtailment although the inverter should not be curtailed unfairly because of just the location of the PV owner on the feeder. |
| 5 | Rise in voltage due to sudden connection/disconnection of loads from the feeder | The PV inverter will curtail its power and shutdown depending upon the connection/disconnection of loads from the feeder, although the inverter should not be curtailed always because the rise in voltage is due to sudden disconnection of loads which might be disconnected for a duration of 5-10 minutes such as refrigerator that runs their compressor for a duration of 5 minutes and then turns off. |
| 6 | Rise in voltage due to many PV inverter connected on the same phase with no load | The PV inverter will curtail its power and shutdown depending upon the number of PV inverter connected to the same phase of the feeder with no loads connected. |

The examples shown in Table 2 may also apply to wind turbines and/or other renewable energy sources. Additionally or alternatively, the examples in Table 2 may also apply to decisions based on frequency (or any other electrical input parameter, such as current, power, etc.) only or in combination with voltage.

In what follows, examples of the decision making process being operated by the control unit 130 and/or the server 150 based on the measured at least one electrical input parameter, preferably in combination with the local and/or external power generation data.

Second, examples are provided for scenarios/situations in which the decision making process is based on the at least one electrical input parameter in combination with the local and/or external power generation data. We refer to Table 3 below relating to examples of preventing unwanted/unnecessary APC of a local converter 240 (e.g., PV inverter) when voltage, real-time PV output data (i.e. local power generation data) and forecast PV output data (i.e., external power generation data) are considered in combination when operating the decision making process. Preferably, the power difference value is compared and/or calculated and the rate of change on the power difference value is determined.

**Table 3 - Decision based on the at least one electrical input parameter, the local power generation data and the external power generation data in a decision making process**

| | Decision based on Voltage, real-time PV output and forecast PV output | |
|---|---|---|
| | Situation | Outcome |
| 1 | Rise in voltage momentarily to network voltage upper limit (for e.g. rise to 253 V for 2-3 minutes and then goes back below this limit) | The PV inverter will not curtail its power for this momentary rise in voltage when the decision is based on the voltage, real-time PV output and forecast PV output as long as the rate of decrease of real-time PV output for the consecutive 3 minutes is less than 5% of kWp rating of PV installation per minute as compared to forecast PV output. If or when it does not satisfy the above condition, the APC management will be activated to avoid curtailment. |
| 2 | Rise in voltage due to short circuit in phase(s) other than the phase where PV inverter is connected | The PV inverter will not shutdown to curtail its power for this temporary rise in voltage due to short circuit in other phase(s) as the voltage will come back to nominal value as soon as the fault is cleared as long as the rate of decrease of real-time PV output for the consecutive 3 minutes is less than 5% of kWp rating of PV installation per minute as compared to forecast PV output. |
| 3 | Rise in voltage due to unbalanced loading of the phase(s) | The PV inverter power will not be curtailed depending upon the level of loading for the rise in voltage is due to unbalanced loading of other phase(s) which can be momentarily/temporary and will go away once the loading is removed as long as the rate of decrease of real-time PV output for the consecutive 3 minutes is less than 5% of kWp rating of PV installation per minute as compared to forecast PV output. |
| 4 | Rise in voltage for PV owners located at the end of the feeder | The PV inverter will not shutdown unfairly depending upon just the location of the PV owner on the feeder which means that after the rise in voltage to the upper limit, if the rate of decrease of real-time PV output for the consecutive 3 minutes is less than 5% of kWp rating of PV installation per minute as compared to forecast PV output. |
| 5 | Rise in voltage due to sudden connection/disconnection of loads from the feeder | The PV inverter will not be curtailed always depending upon the connection/disconnection of loads from the feeder when the decision is based on the voltage, real-time PV output and forecast PV output, because the rise in voltage might be due to sudden disconnection of loads which might be disconnected for a duration of 5-10 minutes such as refrigerator that runs their compressor for a duration of 5 minutes and then turns off. |
| 6 | Rise in voltage due to many PV inverters connected on the same phase with no load | The PV inverter will not curtail its power depending upon the number of PV inverter connected to the same phase of the feeder with no loads. The APC management will measure the rise in voltage to the upper limit, and if the rate of decrease of real-time PV output for the consecutive 3 minutes is less than 5% of kWp rating of PV installation per minute as compared to forecast PV output, APC management will be activated if or when it doesn't satisfy the above. |

The examples shown in Table 2 may also apply to wind turbines or other renewable energy sources. Additionally or alternatively, the examples in Table 2 may also apply to decisions based on frequency (or any other electrical input parameter, such as current, power, etc.) only or in combination with voltage.

## Claims

1. A system for managing power flow or energy in a nano- or microgrid (200), comprising at least one renewable energy source (210) and at least one local load (221, 222), and between the nano- or microgrid (200) and a wide area synchronous grid comprising at least one phase, the system (100) comprising:
- an input module (110) connectable to said at least one phase and configured to measure at least one electrical input parameter of the at least one phase and to provide at least one electrical input parameter data;
- at least one primary switching means (S1, S2), configured to connect or disconnect the nano- or microgrid (200) to or from one or more of said at least one phase, resulting in an off-grid or on-grid mode of operation of the nano- or microgrid (200); and
- at least one secondary switching means (S3, S4) configured to connect or disconnect one or more of the at least one renewable energy source (210) to or from one or more of said at least one local load (221, 222),
**characterized in that** the system (100) further comprises:
- a control unit (130) having inputs for:
- receiving (507) the measured at least one electrical input parameter from the input module (110);
- receiving (507) local power generation data from a unit within the nano- or microgrid (200) which measures the power actually generated by means of said at least one renewable energy source (210); and
- receiving (508) external power generation data from an external provider, said external power generation data being representative of the power that theoretically should be generated by means of said at least one renewable energy source (210) based on external factors, and
wherein the control unit (130) is provided for:
- calculating a power difference value based on the local power generation data and the external power generation data;
- determining (510) a rate of change of the power difference value;
- operating a decision making process based on the determined rate of change of the power difference value and on the measured at least one electrical input parameter; and
- operating one or more of the at least one primary switching means (S1, S2) and the at least one secondary switching means (S3, S4) based on a result of the decision making process.

2. The system according to claim 1, wherein control unit (130) operates the decision making process comprising:
- comparing (509) the measured at least one electrical input parameter with at least one predetermined electrical input parameter threshold.

3. The system according to any one of claims 1 and 2, wherein control unit (130) operates the decision making process comprising:
- comparing (511) the determined rate of change of said power difference value with a predetermined rate of change threshold.

4. The system according to any of claims 2 and 3, wherein the control unit (130) is provided for, upon determining that the measured at least one electrical input parameter does not exceed the at least one predetermined electrical input parameter threshold, and/or upon determining that the rate of change of the power difference value does not exceed the predetermined rate of change threshold:
- operating (514) the at least one primary switching means (S1, S2) to connect the nano- or microgrid (200) to said at least one phase leading to an on-grid mode of operation.

5. The system according to claims 2 and 3, wherein the control unit (130) is provided for, upon determining that the measured at least one electrical input parameter exceeds the at least one predetermined electrical input parameter threshold, and upon determining that the rate of change of the power difference value exceeds a predetermined rate of change threshold:
- operating (512) the at least one primary switching means (S1, S2) to disconnect the nano- or microgrid (200) from the one or more of said at least one phase resulting in an off-grid mode of operation, and
- operating (513) one or more of the at least one secondary switching means (S3, S4) to connect one or more of the at least one renewable energy source (210) to one or more of said at least one local load (221, 222).

6. The system according to any of claims 2-5, wherein the at least one predetermined electrical input parameter threshold is in the range of 105-115% of a nominal voltage and/or 50.2 Hz in a 50 Hz system and/or 60.2 Hz in a 60 Hz system, and/or wherein the predetermined rate of change threshold is greater than 5% of peak power generated by the nano- or microgrid per minute.

7. The system according to any preceding claim, wherein the inputs of the control unit (130) are further provided for:
- receiving (501), from the external provider, forecast power generation data comprising forecast power generation data for a predetermined period in the future and historical power generation data, and
- receiving from the input module (110), the at least one electrical input parameter data,
wherein the control unit is provided for:2
- determining (502) a prediction of at least one electrical input parameter for the predetermined period based on the forecast power generation data, the historical power generation data and the at least one electrical input parameter data.

8. The system according to claim 7, wherein the control unit (130) is further provided for:
- operating the one or more of the at least one secondary switching means (S3, S4) based on the predicted at least one electrical input parameter data for the predetermined period to perform pre-emptive management on one or more of the at least one local load (221, 222).

9. The system according to claim 8, wherein the control unit (130) is provided for:
- determining (503) a time and a duration where the predicted at least one electrical input parameter data for the predetermined period exceeds the at least one predetermined electrical input parameter threshold;
- operating (505, 506) the one or more of the at least one secondary switching means (S3, S4) to prepare one or more of the at least one local load (221, 222), based on the determined time and duration.

10. The system according to any of claims 5-9, further comprising a power converter (140) connectable to the wide area synchronous grid and to the nano- or microgrid (200), wherein the control unit (130) is provided for, upon determining that the at least one electrical input parameter data exceeds the at least one predetermined electrical input parameter threshold and upon determining that the rate of change of the power difference value exceeds the predetermined rate of change threshold:
- controlling (512) the power converter (140) to set and/or maintain the at least one electrical output parameter of the nano- or microgrid (200) to a nominal value.

11. The system according to claim 10, further comprising at least one tertiary switching means (S5, S6) configured to connect or disconnect a local power converter (240) comprised in the nano- or microgrid (200) to or from the at least one renewable energy source (210), and to connect or disconnect the at least one renewable energy source (210) to or from the power converter in the system (100), preferably to or from the power converter (140).

12. The system according to any of claims 7-11, wherein the predetermined period is at least one of month(s), week(s), day(s), hour(s), minute(s) and second(s).

13. The system according to any preceding claim, wherein the control unit (130) is provided for adjusting at least one of the forecast power generation data and the historical power generation data based on geographical location and technical details of the at least one renewable energy source (210).

14. The system according to any preceding claim, further comprising at least one of a server (150), one or more batteries (140) and a communication module (160), the communication module (160) configured to communicate data between any two of the server (150), the external provider and the inputs in the control unit (130).

15. A method for operating a system for managing power flow or energy in a nano- or microgrid, comprising at least one renewable energy source and at least one local load,
the method comprising:
- providing (507), to inputs of a control unit, local power generation data from a unit within the nano- or microgrid which measures the power actually generated by means of said at least one renewable energy source;
- providing (508), to the inputs of the control unit, external power generation data from an external provider, said external power generation data being representative of the power that theoretically should be generated by means of said at least one renewable energy source based on external factors;
- providing, to the inputs of the control unit, the measured at least one electrical input parameter from the input module;
- calculating a power difference value based on the local power generation data and the external power generation data;
- determining (510) a rate of change of the power difference value;
- operating a decision making process based on the determined rate of change of the power difference value and on the measured at least one electrical input parameter; and
- operating one or more of the at least one primary switching means and the at least one secondary switching means based on a result of the decision making process.

## Patentansprüche

1. System zur Verwaltung des Leistungsflusses oder der Energie in einem Nano- oder Mikronetz (200), das mindestens eine erneuerbare Energiequelle (210) und mindestens eine lokale Last (221, 222) umfasst, und zwischen dem Nano- oder Mikronetz (200) und einem weiträumigen synchronen Netz, das mindestens eine Phase umfasst, wobei das System (100) Folgendes umfasst:
- ein Eingangsmodul (110), das mit der mindestens einen Phase verbunden werden kann und so konfiguriert ist, dass es mindestens einen elektrischen Eingangsparameter der mindestens einen Phase misst und mindestens einen elektrischen Eingangsparameterwert bereitstellt;
- mindestens ein primäres Schaltmittel (S1, S2), das so konfiguriert ist, dass es das Nano- oder Mikronetz (200) mit einer oder mehreren der mindestens einen Phase verbindet oder davon trennt, was zu einem vom Netz getrennten oder mit dem Netz verbundenen Betriebsmodus des Nano- oder Mikronetzes (200) führt; und
- mindestens ein sekundäres Schaltmittel (S3, S4), das so konfiguriert ist, dass es eine oder mehrere der mindestens einen erneuerbaren Energiequelle (210) mit einer oder mehreren der mindestens einen lokalen Last (221, 222) verbindet oder von dieser trennt,
**dadurch gekennzeichnet, dass** das System (100) weiterhin umfasst:
- eine Steuereinheit (130) mit Eingängen für:
- Empfangen (507) des gemessenen mindestens einen elektrischen Eingangsparameters von dem Eingangsmodul (110);
- Empfangen (507) lokaler Energieerzeugungsdaten von einer Einheit innerhalb des Nano- oder Mikronetzes (200), die die mittels der mindestens einen erneuerbaren Energiequelle (210) tatsächlich erzeugte Energie misst; und
- Empfangen (508) externer Energieerzeugungsdaten von einem externen Anbieter, wobei die externen Energieerzeugungsdaten repräsentativ für die Energie sind, die theoretisch mittels der mindestens einen erneuerbaren Energiequelle (210) auf der Grundlage externer Faktoren erzeugt werden sollte, und
wobei die Steuereinheit (130) vorgesehen ist für:
- Berechnen eines Leistungsdifferenzwertes auf der Grundlage der lokalen Stromerzeugungsdaten und der externen Stromerzeugungsdaten;
- Bestimmen (510) einer Änderungsrate des Leistungsdifferenzwertes;
- Durchführen eines Entscheidungsfindungsprozesses auf der Grundlage der bestimmten Änderungsrate des Leistungsdifferenzwertes und des gemessenen mindestens einen elektrischen Eingangsparameters; und
- Betreiben eines oder mehrerer der mindestens einen primären Schaltmittel (S1, S2) und der mindestens einen sekundären Schaltmittel (S3, S4) auf der Grundlage eines Ergebnisses des Entscheidungsfindungsprozesses.

2. System nach Anspruch 1, wobei die Steuereinheit (130) den Entscheidungsfindungsprozess durchführt, der Folgendes umfasst:
- Vergleichen (509) des gemessenen mindestens einen elektrischen Eingangsparameters mit mindestens einem vorgegebenen Schwellenwert für den elektrischen Eingangsparameter.

3. System nach einem der Ansprüche 1 und 2, wobei die Steuereinheit (130) den Entscheidungsfindungsprozess durchführt:
- Vergleichen (511) der ermittelten Änderungsrate des Leistungsdifferenzwertes mit einem vorgegebenen Schwellenwert für die Änderungsrate.

4. System nach einem der Ansprüche 2 und 3, wobei die Steuereinheit (130) dazu vorgesehen ist, bei der Feststellung, dass der gemessene mindestens eine elektrische Eingangsparameter den mindestens einen vorbestimmten Schwellenwert für den elektrischen Eingangsparameter nicht überschreitet, und/oder bei der Feststellung, dass die Änderungsrate des Leistungsdifferenzwerts den vorbestimmten Schwellenwert für die Änderungsrate nicht überschreitet:
- Betreiben (514) des mindestens einen primären Schaltmittels (S1, S2), um das Nano- oder Mikronetz (200) mit der mindestens einen Phase zu verbinden, die zu einem mit dem Netz verbundenen Betriebsmodus führt.

5. System nach einem der Ansprüche 2 und 3, wobei die Steuereinheit (130) dazu vorgesehen ist, bei der Feststellung, dass der gemessene mindestens eine elektrische Eingangsparameter den mindestens einen vorbestimmten Schwellenwert für den elektrischen Eingangsparameter überschreitet, und bei der Feststellung, dass die Änderungsrate des Leistungsdifferenzwerts einen vorbestimmten Schwellenwert für die Änderungsrate überschreitet:
- Betreiben (512) des mindestens einen primären Schaltmittels (S1, S2), um das Nano- oder Mikronetz (200) von der einen oder mehreren der mindestens einen Phase zu trennen, was zu einem vom Netz getrennten Betriebsmodus führt, und
- Betreiben (513) eines oder mehrerer der mindestens einen sekundären Schaltmittel (S3, S4), um eine oder mehrere der mindestens einen erneuerbaren Energiequelle (210) mit einer oder mehreren der mindestens einen lokalen Last (221, 222) zu verbinden.

6. System nach einem der Ansprüche 2 bis 5, wobei der mindestens eine vorgegebene Schwellenwert für einen elektrischen Eingangsparameter im Bereich von 105 bis 115 % einer Nennspannung und/oder 50,2 Hz in einem 50-Hz-System und/oder 60,2 Hz in einem 60-Hz-System liegt und/oder wobei der vorgegebene Schwellenwert für die Änderungsrate größer als 5 % der von dem Nano- oder Mikronetz erzeugten Spitzenleistung pro Minute ist.

7. Das System nach einem der vorhergehenden Ansprüche, wobei die Eingänge der Steuereinheit (130) weiterhin für vorgesehen sind:
- Empfangen (501) von prognostizierten Stromerzeugungsdaten von dem externen Anbieter, welche prognostizierte Stromerzeugungsdaten für einen vorbestimmten Zeitraum in der Zukunft und historische Stromerzeugungsdaten umfassen, und
- Empfangen der mindestens einen elektrischen Eingangsparameterdaten von dem Eingangsmodul (110), wobei die Steuereinheit dazu vorgesehen ist:
- Bestimmen (502) einer Vorhersage von mindestens einem elektrischen Eingangsparameter für die vorbestimmte Periode auf der Grundlage der prognostizierten Stromerzeugungsdaten, der historischen Stromerzeugungsdaten und der mindestens einen elektrischen Eingangsparameterdaten.

8. System nach Anspruch 7, wobei die Steuereinheit (130) ferner vorgesehen ist für:
- Betreiben des einen oder mehrerer der mindestens einen sekundären Schaltmittel (S3, S4) auf der Grundlage der vorhergesagten mindestens einen elektrischen Eingangsparameterdaten für die vorbestimmte Periode, um ein präemptives Management für eine oder mehrere der mindestens einen lokalen Last (221, 222) durchzuführen.

9. System nach Anspruch 8, wobei die Steuereinheit (130) vorgesehen ist für:
- Bestimmen (503) einer Zeit und einer Dauer, bei der die vorhergesagten mindestens einen elektrischen Eingangsparameterdaten für die vorbestimmte Periode den mindestens einen vorbestimmten elektrischen Eingangsparameterschwellenwert überschreiten;
- Betreiben (505, 506) des einen oder mehrerer der mindestens einen sekundären Schaltmittel (S3, S4), um eine oder mehrere der mindestens einen lokalen Last (221 , 222) auf der Grundlage der bestimmten Zeit und Dauer vorzubereiten.

10. System nach einem der Ansprüche 5 bis 9, das ferner einen Stromrichter (140) umfasst, der mit dem Weitbereichssynchronnetz und dem Nano- oder Mikronetz (200) verbunden werden kann, wobei die Steuereinheit (130) dazu vorgesehen ist, bei der Feststellung, dass die mindestens einen elektrischen Eingangsparameterdaten den mindestens einen vorbestimmten Schwellenwert für den elektrischen Eingangsparameter überschreiten, und bei der Feststellung, dass die Änderungsrate des Leistungsdifferenzwerts den vorbestimmten Schwellenwert für die Änderungsrate überschreitet:
- Steuern (512) des Stromrichters (140), um den mindestens einen elektrischen Ausgangsparameter des Nano- oder Mikronetzes (200) auf einen Nennwert einzustellen und/oder zu halten.

11. System nach Anspruch 10, das ferner mindestens ein tertiäres Schaltmittel (S5, S6) umfasst, das so konfiguriert ist, dass es einen im Nano- oder Mikronetz (200) enthaltenen lokalen Stromrichter (240) mit der mindestens einen erneuerbaren Energiequelle (210) verbindet oder von ihr trennt und die mindestens eine erneuerbare Energiequelle (210) mit dem Stromrichter im System (100), vorzugsweise mit dem Stromrichter (140), verbindet oder von ihm trennt.

12. System nach einem der Ansprüche 7 bis 11, wobei der vorbestimmte Zeitraum mindestens einer der folgenden ist: Monat(e), Woche(n), Tag(e), Stunde(n), Minute(n) und Sekunde(n).

13. System nach einem der vorhergehenden Ansprüche, wobei die Steuereinheit (130) vorgesehen ist, um die prognostizierten Stromerzeugungsdaten und/oder die historischen Stromerzeugungsdaten auf der Grundlage des geografischen Standorts und der technischen Details der mindestens einen erneuerbaren Energiequelle (210) anzupassen.

14. Das System nach einem der vorhergehenden Ansprüche umfasst außerdem mindestens einen Server (150), eine oder mehrere Batterien (140) und ein Kommunikationsmodul (160), wobei das Kommunikationsmodul (160) so konfiguriert ist, dass es Daten zwischen zwei aus dem Server (150), dem externen Anbieter und den Eingängen in der Steuereinheit (130) übermittelt.

15. Verfahren zum Betrieb eines Systems zur Steuerung des Leistungsflusses oder der Energie in einem Nano- oder Mikronetz, das mindestens eine erneuerbare Energiequelle und mindestens eine lokale Last umfasst, wobei das Verfahren Folgendes umfasst:
- Bereitstellen (507) von lokalen Energieerzeugungsdaten von einer Einheit innerhalb des Nano- oder Mikronetzes, die die tatsächlich mit Hilfe der mindestens einen erneuerbaren Energiequelle erzeugte Energie misst, an Eingänge einer Steuereinheit;
- Bereitstellen (508) von externen Energieerzeugungsdaten von einem externen Anbieter an die Eingänge der Steuereinheit, wobei die externen Energieerzeugungsdaten repräsentativ für die Energie sind, die theoretisch mit Hilfe der mindestens einen erneuerbaren Energiequelle auf der Grundlage externer Faktoren erzeugt werden sollte;
- Bereitstellung der gemessenen mindestens einen elektrischen Eingangsgröße vom Eingangsmodul an die Eingänge der Steuereinheit;
- Berechnen eines Leistungsdifferenzwertes auf der Grundlage der lokalen Stromerzeugungsdaten und der externen Stromerzeugungsdaten;
- Bestimmung (510) einer Änderungsrate des Leistungsdifferenzwertes;
- Durchführen eines Entscheidungsfindungsprozesses auf der Grundlage der bestimmten Änderungsrate des Leistungsdifferenzwertes und des gemessenen mindestens einen elektrischen Eingangsparameters; und
- Betreiben eines oder mehrerer der mindestens einen primären Schaltmittel und der mindestens einen sekundären Schaltmittel auf der Grundlage eines Ergebnisses des Entscheidungsfindungsprozesses.

## Revendications

1. - Système de gestion de flux de puissance ou d'énergie dans un nanoréseau ou miniréseau (200), comprenant au moins une source d'énergie renouvelable (210) et au moins une charge locale (221, 222), et entre le nanoréseau ou miniréseau (200) et un réseau synchrone étendu comprenant au moins une phase, le système (100) comprenant :
- un module d'entrée (110) connectable à ladite au moins une phase et configuré pour mesurer au moins un paramètre d'entrée électrique de l'au moins une phase et pour fournir des données de l'au moins un paramètre d'entrée électrique ;
- au moins un moyen de commutation primaire (S1, S2), configuré pour connecter ou déconnecter le nanoréseau ou miniréseau (200) à ou depuis une ou plusieurs de ladite au moins une phase, conduisant à un mode de fonctionnement hors réseau ou sur réseau du nanoréseau ou miniréseau (200) ; et
- au moins un moyen de commutation secondaire (S3, S4) configuré pour connecter ou déconnecteur une ou plusieurs de l'au moins une source d'énergie renouvelable (210) à ou depuis une ou plusieurs de ladite au moins une charge locale (221, 222),
**caractérisé par le fait que** le système (100) comprend en outre :
- une unité de commande (130) ayant des entrées pour :
- recevoir (507) l'au moins un paramètre d'entrée électrique mesuré en provenance du module d'entrée (110) ;
- recevoir (507) des données de génération de puissance locale en provenance d'une unité dans le nanoréseau ou miniréseau (200) qui mesure la puissance réellement générée au moyen de ladite au moins une source d'énergie renouvelable (210) ; et
- recevoir (508) des données de génération de puissance externe en provenance d'un fournisseur externe, lesdites données de génération de puissance externe étant représentatives de la puissance qui devrait théoriquement être générée au moyen de ladite au moins une source d'énergie renouvelable (210) sur la base de facteurs externes, et
dans lequel l'unité de commande (130) est prévue pour :
- calculer une valeur de différence de puissance sur la base des données de génération de puissance locale et des données de génération de puissance externe ;
- déterminer (510) un taux de variation de la valeur de différence de puissance ;
- mettre en oeuvre un processus de prise de décision sur la base du taux de variation déterminé de la valeur de différence de puissance et de l'au moins un paramètre d'entrée électrique mesuré ; et
- actionner un ou plusieurs de l'au moins un moyen de commutation primaire (S1, S2) et de l'au moins un moyen de commutation secondaire (S3, S4) sur la base d'un résultat du processus de prise de décision.

2. - Système selon la revendication 1, dans lequel l'unité de commande (130) met en oeuvre le processus de prise de décision comprenant :
- comparer (509) l'au moins un paramètre d'entrée électrique mesuré à au moins un seuil de paramètre d'entrée électrique prédéterminé.

3. - Système selon l'une quelconque des revendications 1 et 2, dans lequel l'unité de commande (130) met en oeuvre le processus de prise de décision comprenant :
- comparer (511) le taux de variation déterminé de ladite valeur de différence de puissance à un seuil de taux de variation prédéterminé.

4. - Système selon l'une quelconque des revendications 2 et 3, dans lequel l'unité de commande (130) est prévue, après détermination du fait que l'au moins un paramètre d'entrée électrique mesuré ne dépasse pas l'au moins un seuil de paramètre d'entrée électrique prédéterminé, et/ou après détermination du fait que le taux de variation de la valeur de différence de puissance ne dépasse pas le seuil de taux de variation prédéterminé, pour :
- actionner (514) l'au moins un moyen de commutation primaire (S1, S2) pour connecter le nanoréseau ou miniréseau (200) à ladite au moins une phase, conduisant à un mode de fonctionnement sur réseau.

5. - Système selon les revendications 2 et 3, dans lequel l'unité de commande (130) est prévue, après détermination du fait que l'au moins un paramètre d'entrée électrique mesuré dépasse l'au moins un seuil de paramètre d'entrée électrique prédéterminé, et après détermination du fait que le taux de variation de la valeur de différence de puissance dépasse un seuil de taux de variation prédéterminé, pour :
- actionner (512) l'au moins un moyen de commutation primaire (S1, S2) pour déconnecter le nanoréseau ou miniréseau (200) de la phase ou des phases parmi ladite au moins une phase, conduisant à un mode de fonctionnement hors réseau, et
- actionner (513) un ou plusieurs de l'au moins un moyen de commutation secondaire (S3, S4) pour connecter une ou plusieurs de l'au moins une source d'énergie renouvelable (210) à une ou plusieurs de ladite au moins une charge locale (221, 222).

6. - Système selon l'une quelconque des revendications 2 à 5, dans lequel l'au moins un seuil de paramètre d'entrée électrique prédéterminé est dans la plage de 105 à 115 % d'une tension nominale et/ou 50,2 Hz dans un système 50 Hz et/ou 60,2 Hz dans un système 60 Hz, et/ou dans lequel le seuil de taux de variation prédéterminé est supérieur à 5 % de la puissance de crête générée par le nanoréseau ou miniréseau par minute.

7. - Système selon l'une quelconque des revendications précédentes, dans lequel les entrées de l'unité de commande (130) sont en outre prévues pour :
- recevoir (501), en provenance du fournisseur externe, des données de génération de puissance prévisionnelles comprenant des données de génération de puissance prévisionnelles pour une période future prédéterminée et des données de génération de puissance historiques, et
- recevoir, en provenance du module d'entrée (110), les données de l'au moins un paramètre d'entrée électrique,
dans lequel l'unité de commande est prévue pour :
- déterminer (502) une prévision d'au moins un paramètre d'entrée électrique pour la période prédéterminée sur la base des données de génération de puissance prévisionnelles, des données de génération de puissance historiques et des données de l'au moins un paramètre d'entrée électrique.

8. - Système selon la revendication 7, dans lequel l'unité de commande (130) est en outre prévue pour :
- actionner le ou les parmi l'au moins un moyen de commutation secondaire (S3, S4) sur la base des données prédites de l'au moins un paramètre d'entrée électrique pour la période prédéterminée afin d'effectuer une gestion préemptive sur une ou plusieurs de l'au moins une charge locale (221, 222).

9. - Système selon la revendication 8, dans lequel l'unité de commande (130) est prévue pour :
- déterminer (503) un moment et une durée pendant lesquels les données prédites de l'au moins un paramètre d'entrée électrique pour la période prédéterminée dépassent l'au moins un seuil de paramètre d'entrée électrique prédéterminé ;
- actionner (505, 506) le ou les parmi l'au moins un moyen de commutation secondaire (S3, S4) pour préparer une ou plusieurs de l'au moins une charge locale (221, 222), sur la base du moment et de la durée déterminés.

10. - Système selon l'une quelconque des revendications 5 à 9, comprenant en outre un convertisseur de puissance (140) connectable au réseau synchrone étendu et au nanoréseau ou miniréseau (200), dans lequel l'unité de commande (130) est prévue, après détermination du fait que les données de l'au moins un paramètre d'entrée électrique dépassent l'au moins un seuil de paramètre d'entrée électrique prédéterminé, et après détermination du fait que le taux de variation de la valeur de différence de puissance dépasse le seuil de taux de variation prédéterminé, pour :
- commander (512) le convertisseur de puissance (140) pour définir et/ou maintenir l'au moins un paramètre de sortie électrique du nanoréseau ou miniréseau (200) à une valeur nominale.

11. - Système selon la revendication 10, comprenant en outre au moins un moyen de commutation tertiaire (S5, S6) configuré pour connecter ou déconnecter un convertisseur de puissance local (240) compris dans le nanoréseau ou miniréseau (200) à ou depuis l'au moins une source d'énergie renouvelable (210), et pour connecter ou déconnecteur l'au moins une source d'énergie renouvelable (210) à ou depuis le convertisseur de puissance dans le système (100), de préférence à ou depuis le convertisseur de puissance (140).

12. - Système selon l'une quelconque des revendications 7 à 11, dans lequel la période prédéterminée est au moins l'une parmi un ou plusieurs mois, une ou plusieurs semaines, un ou plusieurs jours, une ou plusieurs heures, une ou plusieurs minutes, et une ou plusieurs secondes.

13. - Système selon l'une quelconque des revendications précédentes, dans lequel l'unité de commande (130) est prévue pour ajuster au moins l'un parmi les données de génération de puissance prévisionnelles et les données de génération de puissance historiques sur la base d'un emplacement géographique et de détails techniques de l'au moins une source d'énergie renouvelable (210).

14. - Système selon l'une quelconque des revendications précédentes, comprenant en outre au moins l'un parmi un serveur (150), une ou plusieurs batteries (140) et un module de communication (160), le module de communication (160) étant configuré pour communiquer des données entre deux quelconques parmi le serveur (150), le fournisseur externe et les entrées dans l'unité de commande (130).

15. - Procédé de fonctionnement d'un système de gestion de flux de puissance ou d'énergie dans un nanoréseau ou miniréseau, comprenant au moins une source d'énergie renouvelable et au moins une charge locale, le procédé comprenant :
- fournir (507), à des entrées d'une unité de commande, des données de génération de puissance locale provenant d'une unité dans le nanoréseau ou miniréseau qui mesure la puissance réellement générée au moyen de ladite au moins une source d'énergie renouvelable ;
- fournir (508), aux entrées de l'unité de commande, des données de génération de puissance externe provenant d'un fournisseur externe, lesdites données de génération de puissance externe étant représentatives de la puissance qui devrait théoriquement être générée au moyen de ladite au moins une source d'énergie renouvelable sur la base de facteurs externes ;
- fournir, aux entrées de l'unité de commande, l'au moins un paramètre d'entrée électrique mesuré provenant du module d'entrée ;
- calculer une valeur de différence de puissance sur la base des données de génération de puissance locale et des données de génération de puissance externe ;
- déterminer (510) un taux de variation de la valeur de différence de puissance ;
- mettre en oeuvre un processus de prise de décision sur la base du taux de variation déterminé de la valeur de différence de puissance et de l'au moins un paramètre d'entrée électrique mesuré ; et
- actionner un ou plusieurs de l'au moins un moyen de commutation primaire et de l'au moins un moyen de commutation secondaire sur la base d'un résultat du processus de prise de décision.
